# EUROPÄISCHE PATENTSCHRIFT

(11) **EP 4 040 937 B1**
(45) Veröffentlichungstag und Bekanntmachung des Hinweises auf die Patenterteilung: **23.08.2023**
(21) Anmeldenummer: 21807095.1
(22) Anmeldetag: 09.11.2021
(51) Int. Cl.: A01B 13/04, A01B 63/24, A01B 63/26

(54) **VORRICHTUNG ZUM BEARBEITEN EINES LANDWIRTSCHAFTLICHEN BODENS**
DEVICE FOR WORKING AN AGRICULTURAL SOIL
DISPOSITIF DE TRAVAIL D'UN SOL AGRICOLE

(30) Priorität: 09.11.2020 EP 20206503
(43) Veröffentlichungstag der Anmeldung: 17.08.2022
(73) Patentinhaber: Einböck Beteiligungs-GmbH, 4751 Dorf an der Pram (AT)
(72) Erfinder: PICHLER, Bernhard, 4720 Kallham (AT); STEINBERGER, Markus, Waasen (AT)
(74) Vertreter: Feller, Frank
(86) Internationale Anmeldenummer: PCT/EP2021/081058
(87) Internationale Veröffentlichungsnummer: WO 2022/096737

(56) Entgegenhaltungen:
- CN-Y- 201 100 980
- DE-C- 849 618
- FR-A- 1 006 494
- FR-A- 1 061 211
- FR-A- 1 503 803
- FR-A1- 2 947 693
- US-A1- 2012 061 110

## Beschreibung

### I. Anwendungsgebiet

Die vorliegende Erfindung betrifft eine Vorrichtung zum Bearbeiten eines landwirtschaftlichen Bodens. Dabei werden Arbeitswerkzeuge zum Bearbeiten des Bodens zwischen benachbarten Reihen landwirtschaftlicher Nutzpflanzen mit Hilfe eines Zugfahrzeuges bewegt. Bei den Arbeitswerkzeugen kann es sich beispielsweise um Hackwerzeuge, Rechen, Zinken, Fingersterne oder Ähnliches handeln.

### II. Technischer Hintergrund

Der Abstand zwischen Reihen landwirtschaftlicher Nutzpflanzen wird insbesondere abhängig von der Art der Nutzpflanze unterschiedlich groß gewählt. Der Boden zwischen benachbarten Nutzpflanzenreihen wird regelmäßig mit Hilfe landwirtschaftlicher Arbeitsgeräteinheiten bearbeitet, die jeweils mehrere Arbeitswerkzeuge aufweisen. Die Arbeitsgeräteinheiten mit den jeweils mehreren Arbeitswerkzeugen werden hierzu mit Hilfe eines Zugfahrzeuges zwischen benachbarten Nutzpflanzenreihen entlang gezogen. Um eine gleichmäßige Bearbeitung des Bodens zwischen zwei benachbarten Nutzpflanzenreihen zu gewährleisten, muss die Anordnung der Arbeitswerkzeuge an der jeweiligen Arbeitsgeräteinheit quer zu der Zugrichtung des Zugfahrzeuges bzw. quer zu den Nutzpflanzenreihen eingestellt werden können.

Es sind bereits landwirtschaftliche Arbeitsgeräteinheiten bekannt, bei denen eine Einstellung der Arbeitswerkzeuge in der vorgenannten Art möglich ist. Bei diesen Arbeitsgeräteinheiten kann jedes einzelne Arbeitswerkzeug separat und unabhängig von einem anderen Arbeitswerkzeug derselben Arbeitsgeräteinheit quer zu der Zugrichtung verstellt werden. Diese Verstellung erfolgt entweder von Hand durch Lösen und Wiederanziehen von Arretierschrauben oder Ähnlichem oder mit Hilfe von beispielsweise elektrischen Stellantrieben, die jeweils eines der Arbeitswerkzeuge der Arbeitsgeräteinheit verstellen.

Bei den bekannten Arbeitsgeräteinheiten ist es zum Einstellen der Arbeitsgeräteinheit auf einen bestimmten Abstand zweier benachbarter Nutzpflanzenreihen erforderlich, jedes einzelne Arbeitswerkzeug einer jeden Arbeitsgeräteinheit individuell einzustellen. In Abhängigkeit von der Anzahl der Arbeitswerkzeuge pro Arbeitsgeräteinheit müssen mehr oder weniger Arretierschrauben gelöst und wieder angezogen werden. Bei der Verstellung der Arbeitswerkzeuge mittels Stellantrieben ist der maschinelle Aufwand erheblich, da für jedes Arbeitswerkzeug einer jeden Arbeitsgeräteinheit ein eigener Stellantrieb vorgesehen werden muss. Der manuelle oder maschinelle Aufwand zum Einstellen der bekannten Arbeitsgeräteinheiten auf einen anderen Abstand benachbarter Nutzpflanzenreihen ist daher vergleichsweise hoch. Aus der FR 1 061 211 A ist eine Vorrichtung zum Bearbeiten eines landwirtschaftlichen Bodens mit den Merkmalen des Oberbegriffs des Anspruchs 1 bekannt.

### III. Darstellung der Erfindung

### a) Technische Aufgabe

Es ist daher Aufgabe der vorliegenden Erfindung, eine Vorrichtung zum Bearbeiten eines landwirtschaftlichen Bodens mit mehreren Arbeitswerkzeugen zum Bearbeiten des Bodens zu schaffen, bei welcher der manuelle Arbeitsaufwand sowie der maschinelle Aufwand, der zum Verstellen der Arbeitswerkzeuge quer zu der Zugrichtung des Zugfahrzeuges bzw. quer zu den Nutzpflanzenreihen erforderlich ist, möglichst gering ausfällt.

### b) Lösung der Aufgabe

Zur Lösung dieser Aufgabe wird eine Vorrichtung zum Bearbeiten eines landwirtschaftlichen Bodens mit den Merkmalen des Anspruchs 1 vorgeschlagen. Weitere Ausgestaltungen der Erfindung ergeben sich aus den Unteransprüchen.

Erfindungsgemäß wird eine Vorrichtung zum Bearbeiten eines landwirtschaftlichen Bodens durch Bewegen der Vorrichtung entlang des Bodens in einer Fahrtrichtung eines Zugfahrzeuges zum Ziehen der Vorrichtung vorgeschlagen. Die Vorrichtung weist einen Vorrichtungskörper mit einer Längsebene auf, die im Wesentlichen vertikal bzw. senkrecht zu dem zu bearbeitenden Boden sowie im Wesentlichen parallel zu der Fahrtrichtung und den Nutzpflanzenreihen verläuft. Die Vorrichtung weist des Weiteren mehrere Arbeitswerkzeuge und mehrere, längliche Trägerelemente auf, welche die Arbeitswerkzeuge tragen und verstellbar an dem Vorrichtungskörper gelagert sind. Die Trägerelemente sind jeweils quer zu der Längsebene bewegbar, so dass das jeweilige Arbeitswerkzeug in verschiedenen Abständen von der Längsebene der Vorrichtung angeordnet werden kann.

Die erfindungsgemäße Vorrichtung ist mit einer Arretiereinrichtung zum Arretieren der Trägerelemente an dem Vorrichtungskörper versehen. Mit Hilfe der Arretiereinrichtung können die Trägerelemente unbewegbar an dem Vorrichtungskörper arretiert bzw. festgelegt werden. Die Arretiereinrichtung umfasst ein Betätigungsorgan, durch dessen Betätigung entweder eine bereits wirksame Arretierung der mehreren Trägerelemente an dem Vorrichtungskörper gemeinsam lösbar ist oder durch dessen Betätigung die mehreren, noch nicht arretierten Trägerelemente gemeinsam an dem Vorrichtungskörper festlegbar sind.

Ein Vorteil der erfindungsgemäßen Vorrichtung besteht darin, dass die verstellbaren Arbeitswerkzeuge der Vorrichtung auf schnelle und einfache Weise durch Betätigen eines Betätigungsorgans gemeinsam aus ihrer Arretierung gelöst oder durch Betätigen eines Betätigungsorgans gemeinsam an dem Vorrichtungskörper arretiert werden können. Separate Handgriffe zum Lösen oder Arretieren einzelner Arbeitswerkzeuge der Vorrichtung erübrigen sich dadurch.

Im Rahmen der vorliegenden Erfindung ist es denkbar, ein Betätigungsorgan zum gemeinsamen Lösen der Arretierung der mehreren Trägerelemente und ein weiteres Betätigungsorgan zum gemeinsamen Festlegen der mehreren Trägerelemente vorzusehen. Beispielsweise könnte das weitere Betätigungsorgan zum gemeinsamen Festlegen der Trägerelemente entgegen der Wirkung einer oder mehrerer Federelemente in seine Arretierstellung gebracht werden. In dieser Arretierstellung könnte das weitere Betätigungsorgan beispielsweise mit Hilfe eines Riegelelements formschlüssig gehalten werden. Das Betätigungsorgan zum gemeinsamen Lösen der Arretierung könnte dann bei seiner Betätigung derart auf das Riegelelement wirken, dass der Riegel das formschlüssig gehaltene, weitere Betätigungsorgan freigibt und dieses von dem Federelement oder den Federelementen in seine Freigabestellung zurück gedrückt wird.

Besonders vorteilhaft ist es, ein einziges Betätigungsorgan vorzusehen, mittels welchem sowohl die Arretierung der mehreren Trägerelemente an dem Vorrichtungskörper gemeinsam lösbar ist als auch die mehreren Trägerelemente gemeinsam an dem Vorrichtungskörper festlegbar sind.

Die Arretierung der mehreren Trägerelemente an dem Vorrichtungskörper erfolgt erfindungsgemäß reib- bzw. kraftschlüssig. Dadurch wird eine stufenlose Verstellung der Arbeitswerkzeuge relativ zu der Längsebene des Vorrichtungskörpers ermöglicht. Da beim Bearbeiten des landwirtschaftlichen Bodens die quer zu der Fahrtrichtung des Zugfahrzeuges bzw. quer zu der Längsebene des Vorrichtungskörpers wirkenden Kräfte deutlich geringer als die in Fahrtrichtung bzw. in Richtung der Längsebene wirkenden Kräfte sind, ist eine reibschlüssige Arretierung der Trägerelemente an dem Vorrichtungskörper im Rahmen der vorliegenden Erfindung vollkommen ausreichend.

Denkbar ist im Rahmen der vorliegenden Erfindung auch, neben den mehreren Arbeitswerkzeugen, deren Abstand von der Längsebene des Vorrichtungskörpers verstellbar ist, zusätzlich ein oder mehrere Arbeitswerkzeuge vorzusehen, das bzw. die relativ zu dem Vorrichtungskörper nicht bewegt bzw. verstellt werden können. Beispielsweise könnte ein solches zusätzliches Arbeitswerkzeug, das nicht verstellt werden kann, an dem in Fahrtrichtung des Zugfahrzeuges hinteren Ende des Vorrichtungskörpers in dessen Längsebene angeordnet werden.

Bei den landwirtschaftlichen Arbeitswerkzeugen kann es sich beispielsweise um Hackwerkzeuge handeln. Denkbar sind auch Arbeitswerkzeuge in Form von Rechen, Zinken, Fingersternen oder Ähnlichem.

Vorzugsweise weist der Vorrichtungskörper mehrere Führungsaufnahmen mit jeweils zugehörigen Führungsflächen auf. In den Führungsaufnahmen ist jeweils wenigstens eines der Trägerelemente zum Tragen eines jeweiligen Arbeitswerkzeuges entlang der jeweiligen Führungsfläche verschiebbar geführt. Die Arretiereinrichtung wirkt in diesem Fall reib- bzw. kraftschlüssig und weist hierzu mehrere Klemmhebel auf. Jeder der mehreren Führungsaufnahmen zum Aufnehmen der Trägerelemente ist wenigstens einer der mehreren Klemmhebel funktional zugeordnet.

Der jeweilige Klemmhebel ist durch Betätigen des gemeinsam auf alle Klemmhebel wirkenden Betätigungsorgans von einer Klemmstellung, in welcher er das jeweilige Trägerelement oder die jeweiligen Trägerelemente gegen die jeweilige Führungsfläche der jeweiligen Führungsaufnahme drückt und es oder sie dadurch reibschlüssig in der jeweiligen Führungsaufnahme unverschiebbar festlegt, in eine Freigabestellung, in welcher er das jeweilige Trägerelement oder die jeweiligen Trägerelemente freigibt, so dass es oder sie in der jeweiligen Führungsaufnahme entlang der jeweiligen Führungsfläche verschiebbar ist oder sind, und/oder umgekehrt bewegbar.

In vorteilhafter Weise werden die Führungsaufnahmen jeweils von einer rohrartigen Führungshülse gebildet, die wenigstens ein Durchgangsloch aufweist, durch welches der jeweilige Klemmhebel oder die jeweiligen Klemmhebel zum Festlegen des jeweiligen Trägerelements hindurchgreifen kann oder können. Dabei ist es ausreichend, dass der oder die Klemmhebel nur mit seinem oder ihrem zum Klemmen erforderlichen Längenbereich durch das Durchgangsloch hindurch an das Trägerelement angreifen kann oder können.

Vorzugsweise sind die mehreren Klemmhebel um eine jeweilige Drehachse drehbar an dem Vorrichtungskörper gelagert.

Die Arretiereinrichtung umfasst in vorteilhafter Weise wenigstens eine Verbindungsstange, wobei jeder der mehreren Klemmhebel über ein jeweiliges Gelenk derart mit der Verbindungsstange gelenkig verbunden ist, dass ein Längenabschnitt des jeweiligen Klemmhebels, der zwischen der jeweiligen Drehachse und dem jeweiligen Gelenk liegt, in der Klemmstellung unmittelbar oder mittelbar an das jeweilige Trägerelement angreifen kann und somit zum Festlegen des jeweiligen Trägerelements dient.

Ein mittelbares Angreifen eines Klemmhebels an ein Trägerelement kommt beispielsweise dann in Betracht, wenn in einer Führungsaufnahme zwei Trägerelemente gelagert sind und der Klemmhebel unmittelbar nur gegen eines der Trägerelemente drückt. Gegen das andere der beiden in derselben Führungsaufnahme benachbart geführten Trägerelemente drückt der Klemmhebel in diesem Fall nur mittelbar. Die von dem Klemmhebel auf das direkt von ihm berührte Trägerelement aufgebrachte Klemmkraft wird dem anderen Trägerelemnet über das direkt berührte Trägerelement vermittelt.

Vorzugsweise umfasst die Arretiereinrichtung des Weiteren mehrere Dämpfungseinrichtungen, die jeweils zwischen der Verbindungsstange und dem jeweiligen Klemmhebel wirkend angeordnet sind. Die Dämpfungseinrichtungen ermöglichen in vorteilhafter Weise den Ausgleich von Toleranzen sowie sonstigen Maßungenauigkeiten betreffend die einzelnen Bestandteile der Arretiereinrichtung.

Die jeweilige Dämpfungseinrichtung weist vorzugsweise eine Abstützstange sowie eine Druckfeder auf. Dabei ist die jeweilige Abstützstange an dem jeweiligen Gelenk gelenkig mit der Verbindungsstange verbunden. Des Weiteren durchsetzt die jeweilige Abstützstange den jeweiligen Klemmhebel derart, dass sie sich relativ zu dem jeweiligen Klemmhebel bewegen kann. Die jeweilige Druckfeder stützt sich einerseits an der Abstützstange sowie andererseits an dem jeweiligen Klemmhebel ab.

Bei dem Betätigungsorgan handelt es sich vorzugsweise um ein Nockenelement mit einer Nockensteuerfläche, das um eine Nockenachse drehbar an dem Vorrichtungskörper gelagert ist. Die Betätigung des Nockenelements kann beispielsweise mit Hilfe eines herkömmlichen Schraubenschlüssels oder Ähnlichem erfolgen.

In vorteilhafter Weise kann die Arretiereinrichtung einen Stellhebel umfassen, der um eine Stellhebelachse drehbar an dem Vorrichtungskörper gelagert ist. In einem auf einer Seite der Stellhebelachse gelegenen Bereich des Stellhebels weist dieser eine Angriffsfläche auf, an welcher die Nockensteuerfläche angreifen kann, um eine Drehung des Stellhebels um seine Stellhebelachse zu bewirken.

In vorteilhafter Weise umfasst die Arretiereinrichtung der erfindungsgemäßen Vorrichtung wenigstens ein Ausgleichsglied, welches einerseits über ein erstes Ausgleichsgelenk gelenkig mit der Verbindungsstange und andererseits über ein zweites Ausgleichsgelenk auf einer der Angriffsfläche abgewandten Seite der Stellhebelachse gelenkig mit dem Stellhebel verbunden ist. Das Ausgleichsglied dient dem Ausgleich von Bewegungskomponenten der Verbindungsstange in vertikaler Richtung, die sich aus den Drehbewegungen der Klemmhebel um ihre jeweilige Drehachse an dem Vorrichtungskörper ergeben.

Vorzugsweise fällt das erste Ausgleichsgelenk mit demjenigen Gelenk zusammen, welches die Verbindungsstange mit demjenigen Klemmhebel gelenkig verbindet, der am nächsten an dem Stellhebel liegend angeordnet ist. Dies ist vorteilhaft, da auf diese Weise ein separates Ausgleichsgelenk zum Anlenken des Ausgleichsgliedes an die Verbindungsstange gespart werden und der Bauraum der Arretiereinrichtung somit klein gehalten werden kann.

Erfindungsgemäß kann anstelle eines Nockenelements alternativ ein hebelartiges Betätigungsorgan vorgesehen werden, das mit einem ersten und einem zweiten Klemmhebel wirkverbunden ist. Die Wirkverbindung besteht darin, dass diejenigen Enden des ersten und zweiten Klemmhebels, die von den Trägerelementen abgewandt sind, in der jeweiligen Klemmstellung zueinander hingezogen werden, so dass die dem ersten und dem zweiten Klemmhebel zugeordneten Trägerelemente in der Klemmstellung voneinander weg gegen Führungsflächen der Führungsaufnahmen gedrückt werden. Das zueinander Hinziehen der vorgenannten Enden sowie das vorgenannte Wegdrücken der Trägerelemente treten dann ein, wenn die Klemmhebel über Drehachsen am dem Vorrichtungskörper gelagert sind. Ist dies nicht der Fall, so werden die beiden Klemmhebel und die beiden Trägerelemente zueinander hin gezogen.

Im Rahmen der Wirkverbindung zwischen dem Betätigungsorgan und den Klemmhebeln kann das Betätigungsorgan über ein Schwenkgelenk gelenkig mit dem ersten Klemmhebel verbunden sein. Ein längliches Zugelement kann über ein erstes Gelenk mit dem Betätigungsorgan sowie über ein zweites Gelenk mit dem zweiten Klemmhebel verbunden werden. Dabei sind das erste Gelenk und das Schwenkgelenk voneinander beabstandet, wobei dieser Abstand den maximal wirkenden Hebelarm zwischen dem ersten Gelenk und dem Schwenkgelenk darstellt.

Bei dem Verschwenken bzw. Drehen des hebelartigen Betätigungsorgans um die Achse des Schwenkgelenks von einer Losstellung, in welcher sich die Klemmhebel in ihrer Freigabestellung befinden, in eine Arretierstellung, in welcher sich die Klemmhebel in ihrer Klemmstellung befinden, nimmt ein Abstand des ersten Gelenks von dem zweiten Gelenk entgegen der Wirkung einer elastischen Rückstellkraft zunächst zu. Diese Zunahme erfolgt solange, bis in einer Totpunktstellung des Betätigungsorgans ein Maximalwert des Abstandes erreicht wird. Anschließend nimmt der Abstand zwischen dem ersten Gelenk und dem zweiten Gelenk aufgrund der Wirkung der elastischen Rückstellkraft wieder ab.

Somit befindet sich die Losstellung des hebelartigen Betätigungsorgans auf einer Seite des Totpunktes der Schwenkbahn des Betätigungsorgans, während sich die Arretierstellung auf der anderen Seite des Totpunktes der Schwenkbahn des Betätigungsorgans befindet. Es wird dadurch wirksam vermieden, dass sich das Betätigungsorgan von alleine aus der Arretierstellung in die Losstellung oder umgekehrt bewegen kann.

Vorzugsweise weist das erste Gelenk, welches das Betätigungsorgan mit dem Zugelement verbindet, ein Gelenkelement auf, das von dem Zugelement derart durchsetzt ist, dass es in einer Längsrichtung des Zugelements relativ zu diesem bewegbar ist. Bei dem Gelenkelement kann sich beispielsweise um eine Gelenkhülse handeln, die von dem Zugelement quer durchsetzt wird. Die elastische Rückstellkraft kann dabei von wenigstens einer Druckfeder bewirkt werden, die sich an dem Zugelement abstützt und das Gelenkelement in Richtung des zweiten Gelenks drückt, welches das Zugelement mit dem zweiten Klemmhebel verbindet.

In einer Variante der erfindungsgemäßen Vorrichtung stützt sich das Betätigungsorgan auf dem ersten oder dem zweiten Klemmhebel ab und zieht dann beim Verschwenken des Betätigungsorgans von der Losstellung in die Arretierstellung den anderen Klemmhebel bei. Diese Variante benötigt wenige Einzelteile und ist daher sowohl unter Kosten- als auch unter Gewichtsgesichtspunkten vorteilhaft.

In einer weiteren Variante der erfindungsgemäßen Vorrichtung ist das Betätigungsorgan in einem Zwischenraum zwischen dem ersten und dem zweiten Klemmhebel über ein Schwenkgelenk gelenkig an dem Vorrichtungskörper gelagert. Im Gegensatz zu der vorgenannten Variante stützt sich hier das Betätigungsorgan an dem Vorrichtungskörper ab. Dabei ist jeder der Klemmhebel über ein eigenes Zugelement gelenkig mit dem Betätigungsorgan verbunden. Die von dem Betätigungsorgan abgewandten Enden der Zugelemente sind ebenso gelenkig mit dem jeweils zugehörigen Klemmelement verbunden.

Wird das Betätigungsorgan bei der weiteren Variante von der Losstellung in die Arretierstellung verschwenkt, so ergeben sich dieselben Bewegungs- und Kraftverhältnisse wie bei der vorangegangen Variante. Sind die Klemmhebel über Drehachsen an dem Vorrichtungskörper gelagert, so werden ihre Enden, an denen das jeweilige Zugelement angelenkt ist, zueinander hingezogen. Als Folge davon werden die Trägerelemente, welche die jeweils zugehörige Führungsaufnahme und das Klemmloch des jeweils zugehörigen Klemmhebels durchsetzen, voneinander weg gegen Führungsflächen der Führungsaufnahme gedrückt und dadurch verklemmt. Sind die Klemmhebel nicht mittels Drehachse an dem Vorrichtungskörper gelagert, so werden sowohl die Klemmhebel als auch die Trägerelemente zueinander hingezogen, sodass die Trägerelemente auf diese Weise in der Führungsaufnahme verklemmt werden.

Im Rahmen einer noch weiteren Variante der erfindungsgemäßen Vorrichtung kann das Betätigungsorgan außerhalb eines Zwischenraums zwischen dem ersten und dem zweiten Klemmhebel über ein Schwenkgelenk gelenkig an dem Vorrichtungskörper gelagert werden. Dabei ist ein erstes Zugelement einerseits gelenkig mit dem Betätigungsorgan und andererseits gelenkig mit dem ersten Klemmhebel verbunden. Des Weiteren sind die Klemmhebel über ein zweites Zugelement miteinander verbunden, wobei das zweite Zugelement gelenkig mit dem ersten Klemmhebel sowie gelenkig mit dem zweiten Klemmhebel verbunden ist.

Wird bei dieser noch weiteren Variante das Betätigungsorgan von der Losstellung in die Arretierstellung verschwenkt, so werden die mit den Zugstangen verbundenen Enden der Klemmhebel in dieselbe Richtung gezogen. Sind die Klemmhebel jeweils mit einer Drehachse an dem Vorrichtungskörper gelagert, so werden die Trägerelemente ihrerseits auch in dieselbe Richtung gedrückt, die allerdings der Richtung, in welche die den Trägerelementen abgewandten Enden der Klemmhebel gezogen werden, entgegengesetzt gerichtet ist. Werden die Klemmhebel nicht mittels Drehachsen an dem Vorrichtungskörper gelagert, so werden die Klemmhebel und die Trägerelemente alle in dieselbe Richtung hin zum Betätigungsorgan gezogen.

In vorteilhafter Weise kann eine besonders einfache Konstruktion dadurch erreicht werden, dass die Klemmhebel derart angeordnet werden, dass sie sich außerhalb der Führungsaufnahme befinden und außerhalb des Vorrichtungskörpers an den Trägerelementen angreifen. Es ist dann nicht erforderlich, ausreichend Platz für die Klemmhebel innerhalb des Vorrichtungskörpers vorzusehen.

Um eine Beaufschlagung der Trägerelemente mit den Klemmkräften auch dann zu erreichen, wenn die Klemmhebel nicht mittig innerhalb des Vorrichtungskörpers untergebracht sind, kann jeder der Klemmhebel jeweils als Doppelhebel ausgestaltet werden. Dieser Doppelhebel kann dann auf zwei gegenüberliegenden Seiten des Vorrichtungskörpers an dem jeweiligen Trägerelement angreifen. Die Klemmkräfte wirken dann im Hinblick auf die Führungsaufnahmen in dem Vorrichtungskörper symmetrisch auf die Trägerelemente.

In vorteilhafter Weise können die Klemmhebel jeweils ein sie durchsetzendes Klemmloch aufweisen, durch welches sich das jeweilige Trägerelement hindurch erstreckt. Die Lochwandungen des Klemmlochs können das jeweilige Trägerelement dann zumindest auf drei Seiten umgreifen. Bevorzugt ist, ein vollständig umlaufend von Lochwandungen begrenztes Klemmloch vorzusehen, dessen Lochwandungen das jeweilige Trägerloch allseitig umgreifen.

Vorzugsweise weisen das jeweilige Klemmloch eine erste, unrunde Form und der Querschnitt des jeweiligen Trägerelements eine zweite, unrunde Form auf. Besonders bevorzugt sind die erste, unrunde Form und die zweite, unrunde Form identisch gestaltet, beispielsweise als Mehrkantform, insbesondere Vierkantform oder Sechskantform, oder sonstige unrunde Form. Grundsätzlich ist auf ausreichend Spiel zwischen den Lochwandungen des jeweiligen Klemmlochs und der Oberfläche des jeweiligen Trägerelements zu achten, damit letzteres bei in der Freigabestellung befindlichem Klemmhebel problemlos verschoben werden kann.

Die Klemmhebel können um jeweilige Drehachsen drehbar an dem Vorrichtungskörper gelagert sein, müssen es jedoch zumindest dann nicht, wenn das jeweilige Klemmloch eine erste, unrunde Form und der Querschnitt des jeweiligen Trägerelements eine zweite, unrunde Form aufweisen. Wenn die Klemmhebel nicht an dem Vorrichtungskörper gelagert sind, so werden sie samt Zugelement und Betätigungsorgan von den Trägerelementen gehalten, die ihrerseits in den Führungsaufnahmen des Vorrichtungskörpers sitzen. Werden die Trägerelemente bei dieser Bauweise aus den Führungsaufnahmen herausgezogen, so durchsetzen sie auch nicht mehr das Klemmloch in dem jeweiligen Klemmhebel. Die Einheit umfassend die Klemmhebel, das Zugelement und das Betätigungsorgan hängt dann frei in der Luft und muss vor dem Herausziehen der Trägerelemente aus den Klemmlöchern festgehalten werden, wenn verhindert werden soll, dass sie herunterfällt.

In vorteilhafter Weise können eventuell vorhandene Drehachsen der Klemmhebel jeweils in einem Langloch an dem Vorrichtungskörper gelagert werden. Die Drehachsen können sich dann beim Bewegen der Klemmhebel zwischen der Klemmstellung und der Freigabestellung entsprechend der Länge des Langlochs in diesem geführt begrenzt translatorisch bewegen. Dies hat den Vorteil, dass Fertigungstoleranzen problemlos ausgeglichen werden können.

### c) Ausführungsbeispiel

Nachfolgend wird eine Ausführungsform der erfindungsgemäßen Vorrichtung beispielhaft anhand der Zeichnungen beschrieben. Es zeigen:
- Fig. 1:: eine Ansicht auf drei erfindungsgemäße Vorrichtungen gemäß einem ersten Ausführungsbeispiel von oben mit zwischen ihnen befindlichen Nutzpflanzenreihen;
- Fig. 2:: eine perspektivische Ansicht des Ausführungsbeispiels der erfindungsgemäßen Vorrichtung mit vier Arbeitswerkzeugen;
- Fig. 3:: eine perspektivische Ansicht des in Fig. 2 gezeigten Ausführungsbeispiels, wobei die vier Arbeitswerkzeuge und eine von zwei Körperplatten des Vorrichtungskörpers weggelassen wurden;
- Fig. 4:: eine Seitenansicht des in Fig. 3 gezeigten Ausführungsbeispiels, wobei sich die Arretiereinrichtung in gelöstem Zustand befindet;
- Fig. 5:: das in Fig. 4 gezeigte Detail C in vergrößerter Darstellung;
- Fig. 6:: eine Seitenansicht des in Fig. 3 gezeigten Ausführungsbeispiels, wobei sich die Arretiereinrichtung in arretiertem Zustand befindet;
- Fig. 7:: das in Fig. 6 gezeigte Detail D in vergrößerter Darstellung;
- Fig. 8:: eine perspektivische Ansicht des in Fig. 2 gezeigten Ausführungsbeispiels von schräg unten, wobei die Arbeitswerkzeuge weggelassen wurden;
- Fig. 9:: das in Fig. 8 gezeigte Detail B in vergrößerter Darstellung;
- Fig. 10:: das in Fig. 8 gezeigte Detail A in vergrößerter Darstellung;
- Fig. 11:: eine perspektivische Ansicht eines zweiten Ausführungsbeispiels der erfindungsgemäßen Vorrichtung, in welcher sich das Betätigungsorgan in seiner Losstellung befindet;
- Fig. 12:: eine perspektivische Ansicht, die der Ansicht gemäß Fig. 11 entspricht, wobei sich das Betätigungsorgan in seiner Arretierstellung befindet;
- Fig. 13:: eine perspektivische Seitenansicht der in Fig. 11 gezeigten Vorrichtung;
- Fig. 14:: eine perspektivische Seitenansicht der in Fig. 12 gezeigten Vorrichtung;
- Fig. 15:: eine Aufsicht auf die in den Fig. 12 und 14 gezeigten Vorrichtungen von oben;
- Fig. 16:: eine perspektivische Ansicht eines dritten Ausführungsbeispiels der erfindungsgemäßen Vorrichtung, in welcher sich das Betätigungsorgan in seiner Losstellung befindet;
- Fig. 17:: eine perspektivische Ansicht, die der Ansicht gemäß Fig. 16 entspricht, wobei sich das Betätigungsorgan in einer Zwischenposition auf seinem Schwenkweg in die Arretierstellung befindet;
- Fig. 18:: eine perspektivische Ansicht eines vierten Ausführungsbeispiels der erfindungsgemäßen Vorrichtung, in welcher sich das Betätigungsorgan in seiner Losstellung befindet; und
- Fig. 19:: eine perspektivische Ansicht, die der Ansicht gemäß Fig. 18 entspricht, wobei sich das Betätigungsorgan in seiner Arretierstellung befindet.

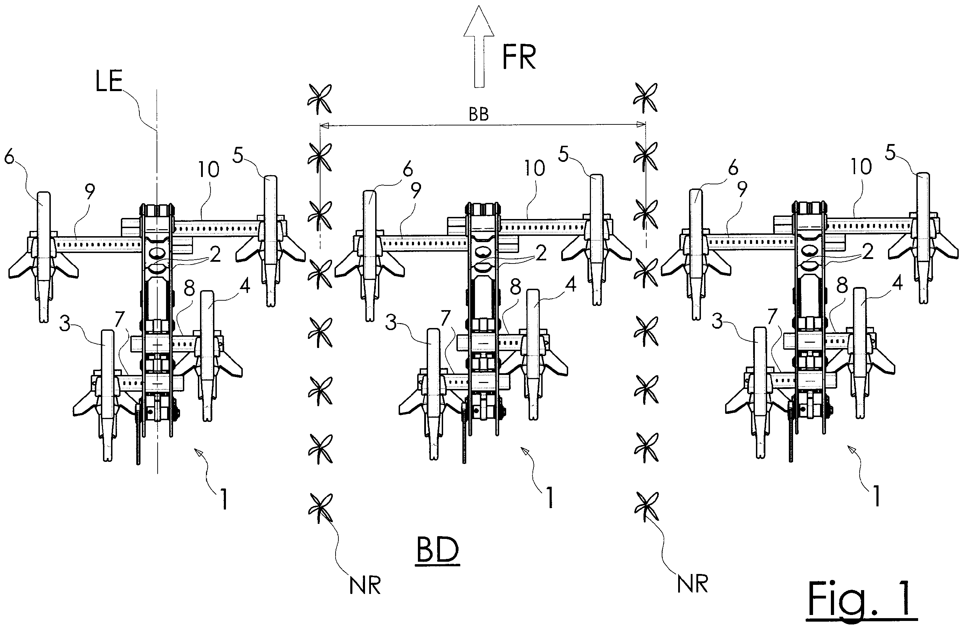

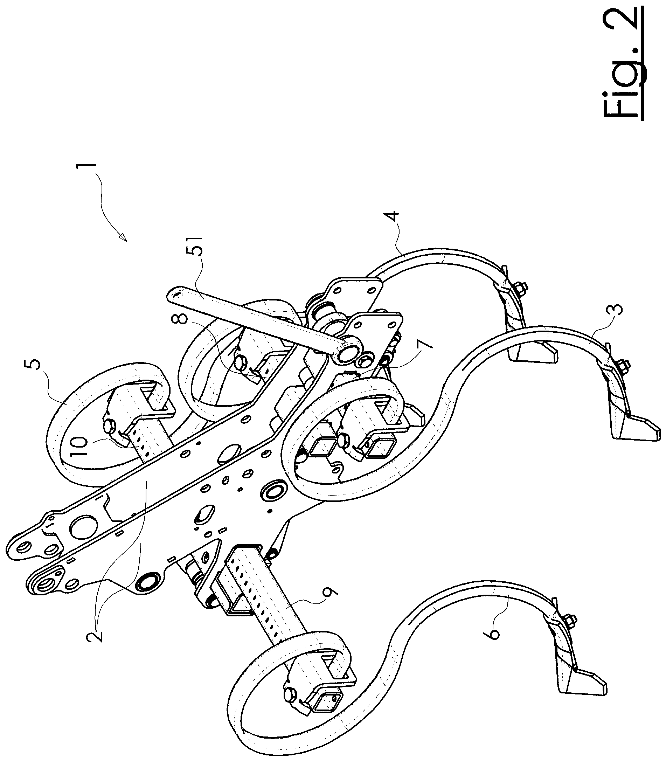

In Fig. 1 entsprechen gleiche Bezugszeichen einander funktional entsprechenden Teilen der drei gezeigten, erfindungsgemäßen Vorrichtungen 1. In den Fig. 2 bis 10 entsprechen gleiche Bezugszeichen gleichen Teilen des dargestellten, ersten Ausführungsbeispiels der erfindungsgemäßen Vorrichtung 1.

In Fig. 1 sind drei erfindungsgemäße und in gleicher Weise ausgebildete Vorrichtungen 1 zum Bearbeiten eines landwirtschaftlichen Bodens in der Ansicht von oben zu erkennen. Zwischen der in Fig. 1 mittleren Vorrichtung 1 und der in Fig. 1 linken Vorrichtung 1 sowie zwischen der in Fig. 1 mittleren Vorrichtung 1 und der in Fig. 1 rechten Vorrichtung 1 ist jeweils eine Nutzpflanzenreihe NR dargestellt. Die drei Vorrichtungen 1 werden gemeinsam mit Hilfe eines nicht gezeigten Zugfahrzeuges in einer Fahrtrichtung FR über den landwirtschaftlichen Boden gezogen. In der Praxis zieht ein Zugfahrzeug noch mehr als die drei gezeigten Vorrichtungen 1 über den Boden BD.

Wie in Fig. 1 zu sehen ist, weist bei dem gezeigten Ausführungsbeispiel jede der drei Vorrichtungen 1 insgesamt vier Arbeitswerkzeuge 3, 4, 5 und 6 in Form von Hackwerkzeugen auf. Mit Hilfe der Arbeitswerkzeuge 3, 4, 5 und 6 soll der landwirtschaftliche Boden BD zwischen benachbarten Nutzpflanzenreihen NR gleichmäßig gehackt werden. Zu diesem Zweck sind die Arbeitswerkzeuge 3, 4, 5 und 6 gleichmäßig über die von dem Abstand der Nutzpflanzenreihen NR definierte Bearbeitungsbreite BB verteilt angeordnet.

Unter anderem in Abhängigkeit von der Art der konkreten Nutzpflanze variieren die vorhandenen Bearbeitungsbreiten BB ihrer Größe nach. In Fig. 1 sind die Arbeitswerkzeuge 3, 4, 5 und 6 zur Bearbeitung einer gezeigten, ersten Bearbeitungsbreite BB angeordnet. Soll mit der gleichen Vorrichtung 1 eine zweite Bearbeitungsbreite BB, die kleiner ist als die erste Bearbeitungsbreite BB, bearbeitet werden, so ist es erforderlich, die Abstände der Arbeitswerkzeuge 3, 4, 5 und 6 von einer in Fig. 1 beispielhaft ganz links mit strichpunktierter Linie eingezeichneten Längsebene LE eines Vorrichtungskörper 2 der Vorrichtung 1 zu ändern bzw. zu verstellen. Um eine derartige Verstellung in einer in Fig. 1 horizontal verlaufenden Richtung vornehmen zu können, sind die Arbeitswerkzeuge 3, 4, 5 und 6 an länglichen Trägerelementen 7, 8, 9 und 10 befestigt, die ihrerseits in einer in Fig. 1 horizontalen Richtung nach links oder rechts verschiebbar an dem Vorrichtungskörper 2 gelagert sind.

Zur Einstellung der Arbeitswerkzeuge 3, 4, 5 und 6 auf eine geänderte Bearbeitungsbreite BB wird zunächst die Arretierung der Trägerelemente 7, 8, 9 und 10 an dem Vorrichtungskörper 2 gemeinsam gelöst. Anschließend werden die Trägerelemente 7, 8, 9 und 10 in Fig. 1 in horizontaler Richtung nach rechts oder links so lange verschoben bzw. eingestellt, bis eine gleichmäßige Anordnung der Arbeitswerkzeuge 3, 4, 5 und 6 über die geänderte Bearbeitungsbreite BB hinweg erreicht ist. Anschließend werden die Trägerelemente 7, 8, 9 und 10 alle gemeinsam wieder arretiert, so dass die Vorrichtung 1 danach zur Bearbeitung des Bodens BD mit geänderter Bearbeitungsbreite BB bereit ist.

Fig. 2 zeigt das Ausführungsbeispiel der erfindungsgemäßen Vorrichtung 1 in perspektivischer Ansicht. Der Vorrichtungskörper 2 umfasst hier zwei parallel zueinander angeordnete und voneinander beabstandete Körperplatten. An diesen beiden Körperplatten sind die Trägerelemente 7, 8, 9 und 10 verschiebbar gelagert.

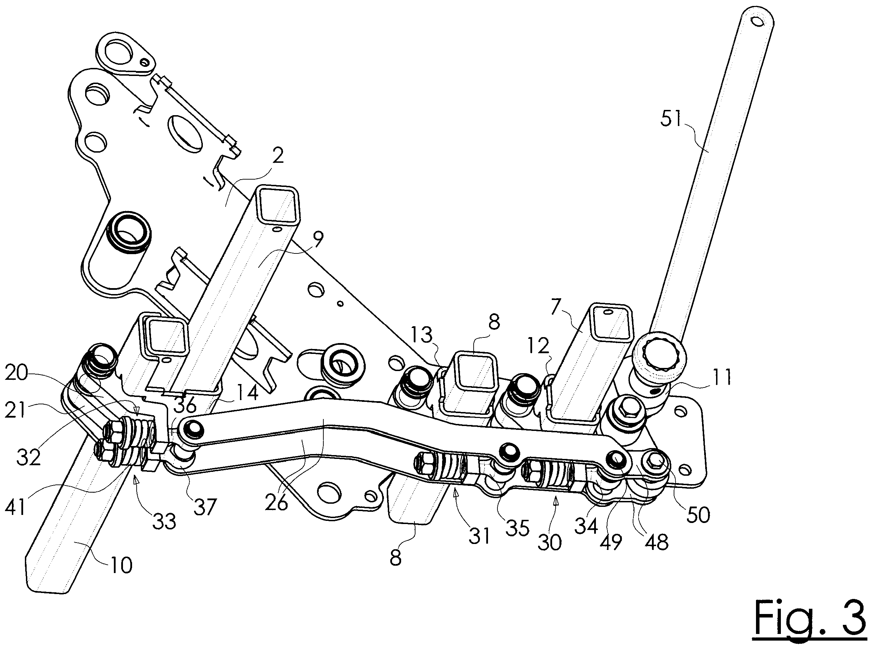

In Fig. 3 ist eine seitliche Ansicht der in Fig. 2 gezeigten Vorrichtung 1 von schräg unten dargestellt, wobei die Arbeitswerkzeuge 3, 4, 5 und 6 sowie eine der beiden Körperplatten des Vorrichtungskörpers 2 weggelassen wurden, um die Konstruktion zwischen den beiden Körperplatten besser sichtbar zu machen. Wie zu erkennen ist, sind an dem Vorrichtungskörper 2 drei Führungsaufnahmen 12, 13 und 14 in Form relativ kurzer, rohrartiger Vierkanthülsen vorgesehen. In die Führungsaufnahme 12 ist das Trägerelement 7 eingeschoben. In die Führungsaufnahme 13 ist das Trägerelement 8 eingeschoben. In die Führungsaufnahme 14 sind die beiden Trägerelemente 9 und 10 eingeschoben.

Wie des Weiteren zu erkennen ist, weisen auch die Trägerelemente 7, 8, 9 und 10 einen Vierkantquerschnitt auf, so dass eine Drehbewegung der Trägerelemente 7, 8, 9 und 10 innerhalb der Führungsaufnahmen 12, 13 und 14 um ihre jeweilige Längsachse formschlüssig verhindert wird. Selbstverständlich können auch andere Querschnittsgeometrien oder andere konstruktive Mittel zur Anwendung kommen, um die Trägerelemente 7, 8, 9 und 10 drehfest in den Führungsaufnahmen 12, 13 und 14 festzulegen.

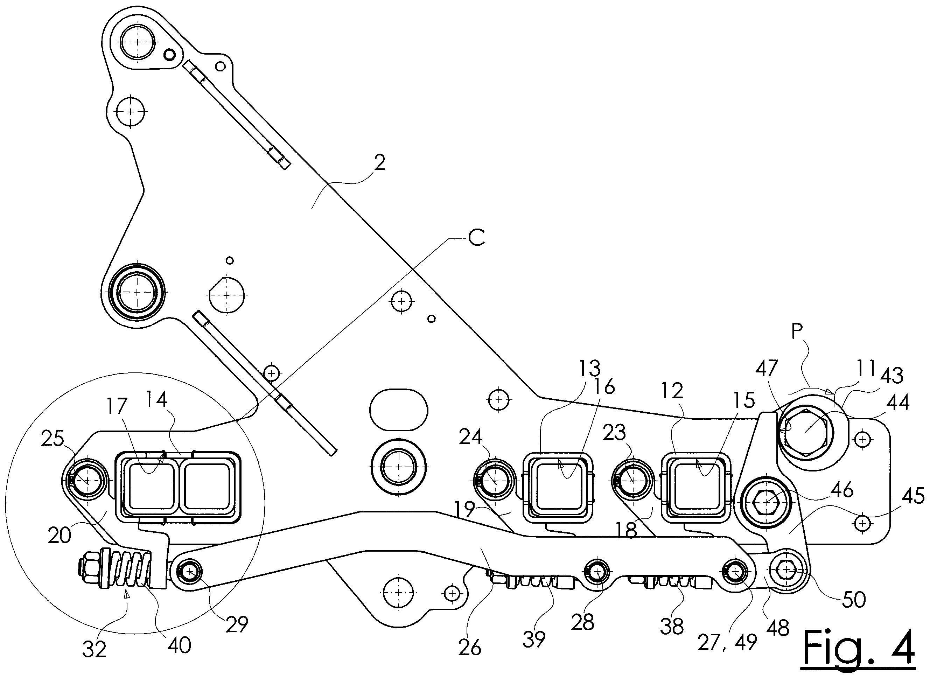

Fig. 4 zeigt eine Seitenansicht des in Fig. 3 perspektivisch gezeigten Ausführungsbeispiels in einer Blickrichtung, die in Richtung der Längsachsen der Trägerelemente 7, 8, 9 und 10 verläuft. Die Arretiereinrichtung zum Lösen und Arretieren der Trägerelemente 7, 8, 9 und 10 in den Führungsaufnahmen 12, 13 und 14 umfasst bei dem gezeigten Ausführungsbeispiel insgesamt vier Klemmhebel 18, 19, 20 und 21, die jeweils um eine Drehachse 23, 24 und 25 schwenkbar an dem Vorrichtungskörper 2 gelagert sind. Dabei ist der Klemmhebel 18 funktional dem Trägerelement 7 und der Klemmhebel 19 funktional dem Trägerelement 8 zugeordnet. Die beiden in Fig. 3 zu sehenden Klemmhebel 20 und 21 sind funktional gemeinsam den Trägerelementen 9 und 10 zugeordnet.

Wie in den Fig. 3 und 4 zu sehen ist, umfasst die Arretiereinrichtung des Weiteren eine Verbindungsstange 26 zum Verbinden der Klemmhebel 18, 19, 20 und 21 miteinander. Wie in Fig. 3 zu erkennen ist, wird die Verbindungsstange 26 von zwei parallel zueinander verlaufenden sowie voneinander beabstandeten Flachmaterialstücken gebildet. Der Klemmhebel 18 ist über ein Gelenk 27, und der Klemmhebel 19 ist über ein Gelenk 28 mit der Verbindungsstange 26 verbunden. Des Weiteren sind die beiden Klemmhebel 20 und 21 über ein gemeinsames Gelenk 29 mit der Verbindungsstange 26 verbunden.

In den Fig. 3 und 4 ist rechts ein Stellhebel 45 zu erkennen, der in seinem mittleren Bereich um eine Stellhebelachse 46 drehbar an dem Vorrichtungskörper 2 gelagert ist. Die Stellhebelachse 46 unterteilt den Stellhebel 45 in einen in Fig. 4 oberen Arm und einen in Fig. 4 unteren Arm. Der in Fig. 4 obere Arm weist eine Angriffsfläche 47 auf, die bei dem gezeigten Ausführungsbeispiel dafür vorgesehen ist, von einer Nockensteuerfläche 43 eines Betätigungsorgans 11 in Form eines Nockenelements angegriffen zu werden. Das Betätigungsorgan 11 in Form des Nockenelements ist um die in Fig. 4 gekennzeichnete Nockenachse 44 drehbar.

An dem in Fig. 4 unteren Arm des Stellhebels 45 ist über ein Ausgleichsgelenk 50 ein Ausgleichsglied 48 angelenkt. Das in Fig. 4 linke Ende des Ausgleichsgliedes 48 ist über ein Ausgleichsgelenk 49 mit der Verbindungsstange 26 verbunden. Dabei fällt in besonders vorteilhafter Weise das Gelenk 27 zur gelenkigen Verbindung des Klemmhebels 18 mit der Verbindungsstange 26 mit dem Ausgleichsgelenk 49 zusammen. Wie in Fig. 3 zu sehen ist, besteht auch das Ausgleichsglied 48 aus zwei parallel zueinander verlaufenden sowie voneinander beabstandeten Flachmaterialstücken.

In den Fig. 3 und 4 sind des Weiteren Dämpfungseinrichtungen 30, 31, 32 und 33 zu erkennen, mittels welchen die Klemmhebel 18, 19, 20 und 21 jeweils mit der Verbindungsstange 26 verbunden sind. Die Dämpfungseinrichtung 30 verbindet den Klemmhebel 18 mit der Verbindungsstange 26. Die Dämpfungseinrichtung 31 verbindet den Klemmhebel 19 mit der Verbindungsstange 26. Die Dämpfungseinrichtung 32 verbindet den Klemmhebel 20 mit der Verbindungsstange 26. Die Dämpfungseinrichtung 33 verbindet den Klemmhebel 21 mit der Verbindungsstange 26.

Die Dämpfungseinrichtungen 30, 31, 32 und 33 weisen jeweils - wie in Fig. 3 zu sehen ist - eine Abstützstange 34, 35, 36 und 37 auf. Die Abstützstange 34 ist über das Gelenk 27 mit der Verbindungsstange 26 verbunden. Die Abstützstange 35 ist über das Gelenk 28 mit der Verbindungsstange 26 verbunden. Die Abstützstangen 36 und 37 sind über das gemeinsame Gelenk 29 mit der Verbindungsstange 26 verbunden.

Wie in den Fig. 3 und 4 des Weiteren zu erkennen ist, weisen die Dämpfungseinrichtungen 30, 31, 32 und 33 jeweils eine Druckfeder 38, 39, 40 und 41 auf, die sich an der jeweiligen Abstützstange 34, 35, 36 und 37 abstützt. Hierzu weisen die Abstützstangen 34, 35, 36 und 37 an ihren von den Gelenken 27, 28 und 29 jeweils abgewandeten Enden ein Gewinde auf, mit dessen Hilfe jeweils ein scheibenförmiger Federsitz von einer Mutter an der jeweiligen Abstützstange 34, 35, 36 und 37 gehalten wird.

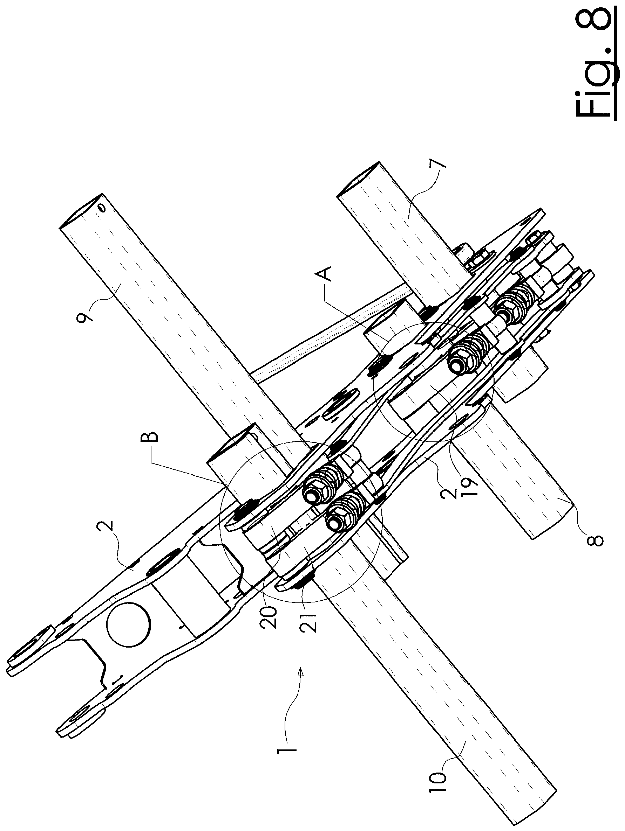

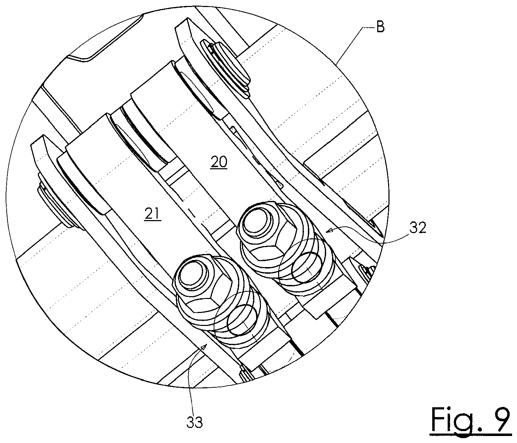

In Fig. 8 ist eine perspektivische Ansicht des Ausführungsbeispiels der erfindungsgemäßen Vorrichtung 1 von schräg unten gezeigt, wobei die Arbeitswerkzeuge 3, 4, 5 und 6 weggelassen wurden. In dem Detail B sind die Klemmhebel 20 und 21 zu erkennen, die auf die Trägerelemente 9 und 10 wirken. In dem Detail A ist der Klemmhebel 19 zu erkennen, der auf das Trägerelement 8 wirkt. Fig. 9 zeigt das Detail B aus Fig. 8 in vergrößerter Darstellung. Neben den Klemmhebeln 20 und 21 sind die diesen zugeordneten Dämpfungseinrichtungen 32 und 33 zu erkennen.

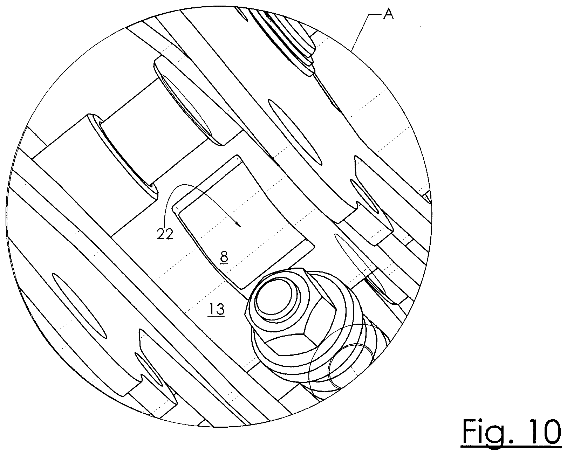

Fig. 10 zeigt das Detail A aus Fig. 8 in vergrößerter Darstellung, wobei der Klemmhebel 19 weggelassen wurde, um ein Durchgangsloch 22 in der Führungsaufnahme 13 zeigen zu können. Durch das hier im Wesentlichen rechteckförmige Durchgangsloch 22 hindurch ist in Fig. 10 das Trägerelement 8 zu erkennen, welches in der Führungsaufnahme 13 verschiebbar geführt ist.

Der Klemmhebel 19 kann durch das Durchgangsloch 22 hindurch an dem Trägerelement 8 angreifen und es reib- bzw. kraftschlüssig in der Führungsaufnahme 13 festklemmen. Ein dem Durchgangsloch 22 entsprechendes Durchgangsloch ist auch in der Führungsaufnahme 12 vorgesehen. Es kann von dem Klemmhebel 18 durchgriffen werden. Ein gemeinsames Durchgangsloch oder zwei separate Durchgangslöcher entsprechend dem Durchgangsloch 22 sind auch in der Führungsaufnahme 14 angeordnet. Das gemeinsame Durchgangsloch oder die beiden separaten Durchgangslöcher können von den Klemmhebeln 20 und 21 durchgriffen werden.

Die Funktionsweise der erfindungsgemäßen Vorrichtung 1 wird nachfolgend anhand der Fig. 4 bis 7 erläutert.

In Fig. 4 befinden sich alle Klemmhebel 18, 19, 20 und 21 in ihrer Freigabestellung, in welcher sie das jeweilige Trägerelement 7, 8, 9 und 10 nicht in den Führungsaufnahmen 12, 13 und 14 festklemmen. In dem in Fig. 4 gezeigten Zustand können die Trägerelemente 7, 8, 9, 10 samt der zugehörigen Arbeitswerkzeuge 3, 4, 5 und 6 senkrecht zu der in Fig. 1 eingezeichneten Längsebene LE verschoben werden.

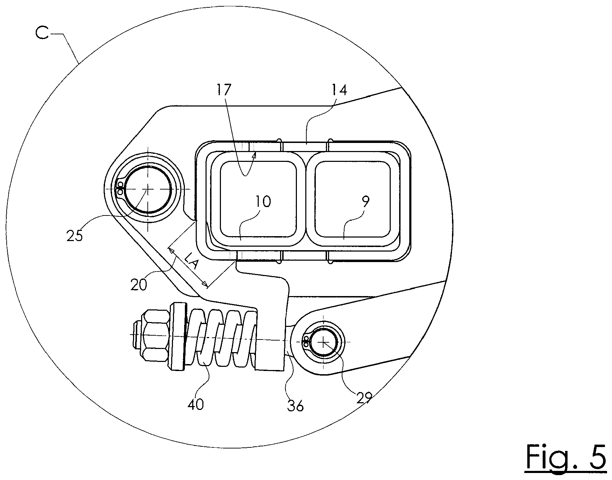

Fig. 5 zeigt das Detail C aus Fig. 4 in vergrößerter Darstellung. Am Beispiel des Klemmhebels 20 ist in Fig. 5 gut zu erkennen, wie er sich in seiner Freigabestellung befindet. Ein Längenabschnitt LA des Klemmhebels 20 durchgreift zwar ein in Fig. 5 im linken unteren Bereich der Führungsaufnahme 14 befindliches Durchgangsloch, greift jedoch nicht an die linke untere Ecke des Querschnitts des Trägerelements 10 an. In Fig. 5 ist ein schmaler Luftspalt zwischen dem Längenabschnitt LA des Klemmhebels 20 und dem Trägerelement 10 zu erkennen. Entsprechende Verhältnisse sind in analoger Weise bei den Klemmhebeln 18 und 19 sowie den Trägerelementen 7 und 8 gegeben, wenn sich die Klemmhebel 18 und 19 in ihrer Freigabestellung befinden.

Nachdem die gewünschten Sollabstände der Arbeitswerkzeuge 3, 4, 5 und 6 von der Längsebene LE des Vorrichtungskörpers 2 durch Verschieben der Trägerelemente 7, 8, 9 und 10 eingestellt worden sind, können die Trägerelemente 7, 8, 9, 10 in den Führungsaufnahmen 12, 13 und 14 arretiert werden. Hierzu wird das als Nockenelement ausgebildete Betätigungsorgan 11 in Fig. 4 gemäß Pfeil P um knapp 180° im Uhrzeigersinn um die Nockenachse 44 gedreht. Dies kann beispielsweise mit Hilfe eines herkömmlichen Schraubenschlüssels 51 geschehen, wie er in den Fig. 2 und 3 gezeigt ist.

Das Drehen des Betätigungsorgans 11 gemäß Pfeil P in Fig. 4 bewirkt, dass die exzentrisch verlaufende Nockensteuerfläche 43 an die Angriffsfläche 47 angreift, gegen diese drückt und an dieser entlang gleitet. Dies hat eine Drehbewegung des Stellhebels 45 im Gegenuhrzeigersinn um die Stellhebelachse 46 zur Folge. Der in Fig. 4 untere Arm des Stellhebels 45 zieht dann das Ausgleichsglied 48 sowie die Verbindungsstange 26 in Fig. 4 nach rechts. Dies wiederum hat zur Folge, dass die Klemmhebel 18, 19, 20 und 21 um ihre jeweiligen Drehachsen 23, 24 und 25 im Gegenuhrzeigersinn schwenken.

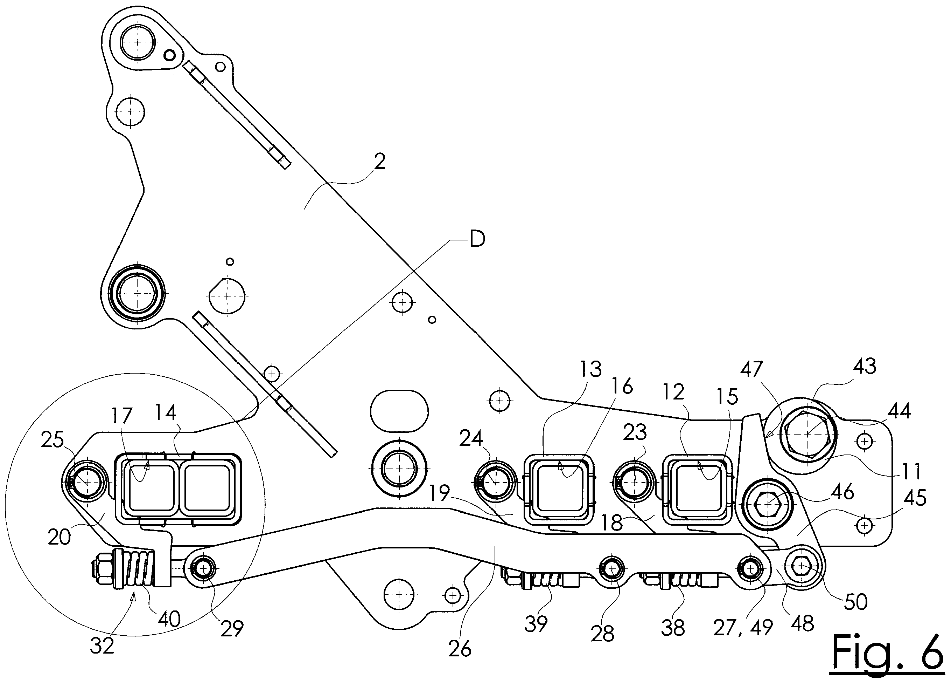

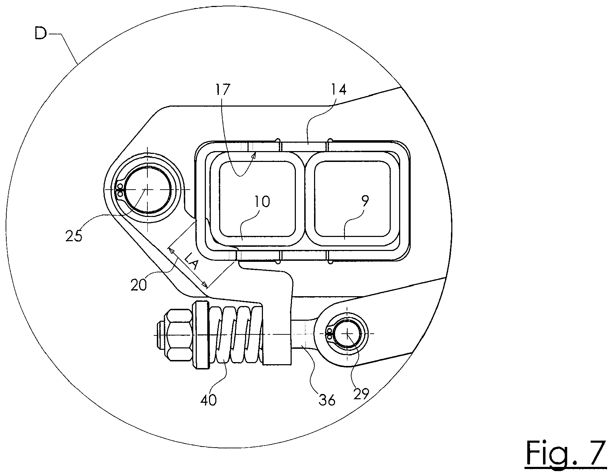

Auf diese Weise wird der in Fig. 6 dargestellte Zustand der Arretiereinrichtung erreicht, in welchem sich alle Klemmhebel 18, 19, 20 und 21 in ihrer jeweiligen Klemmstellung befinden. Fig. 7 zeigt das in Fig. 6 dargestellte Detail D in vergrößerter Darstellung. Am Beispiel des Klemmhebels 20 ist in Fig. 4 zu sehen, wie der Längenabschnitt LA des Klemmhebels 20 das im linken unteren Bereich der Führungsaufnahme 14 befindliche Durchgangsloch durchgreift und gegen die linke untere Ecke des Vierkantquerschnitts des Trägerelements 10 drückt. Die von den beiden Klemmhebeln 20 und 21 auf das Trägerelement 10 aufgebrachte Klemmkraft wird auf das rechts neben dem Trägerelement 10 befindliche Trägerelement 9 übertragen. Die Klemmkraft drückt das Trägerelement 10 unmittelbar und das Trägerelement 9 mittelbar gegen Führungsflächen 17, die von Innenwandungen der Führungsaufnahme 14 gebildet werden. Auf diese Weise werden die Trägerelemente 10 und 9 reib- bzw. kraftschlüssig in der Führungsaufnahme 14 festgelegt bzw. arretiert. Eine Bewegung der Trägerelemente 10 und 9 in einer senkrecht auf der Längsebene LE des Vorrichtungskörpers 2 stehenden Richtung ist jetzt nicht mehr möglich.

Die beispielhaft in Fig. 7 für den Klemmhebel 20 und das Trägerelement 10 gezeigten Verhältnisse sind in der in Fig. 6 dargestellten Klemmstellung der Arretiereinrichtung in analoger Weise auch bei den Klemmhebeln 18 und 19 gegeben. Der Klemmhebel 18 drückt in seiner Klemmstellung das Trägerelement 7 an Führungsflächen 15, die von Innenwandungen der Führungsaufnahme 12 gebildet werden. Der Klemmhebel 19 drückt das Trägerelement 8 gegen Führungsflächen 16, die von Innenwandungen der Führungsaufnahme 13 gebildet werden.

Wird das als Nockenelement ausgebildete Betätigungsorgan 11 aus seiner in Fig. 6 gezeigten Arretiestellung wieder in seine Freigabestellung gemäß Fig. 4 gedreht, so bewegen sich die Klemmhebel 18, 19, 20 und 21 schwerkraftbedingt in ihre jeweilige Freigabstellung zurück.

Wie in den Fig. 5 und 7 zu erkennen ist, ist die Kontur des Längenabschnitts LA des Klemmhebels 20 an die Kontur desjenigen Bereichs der Querschnittsform des Trägerelements 20 angepasst, mit welchem der Längenabschnitt LA in der Klemmstellung des Klemmhebels 20 zusammenwirkt. Entsprechendes gilt in analoger Weise für die Längenabschnitte der Klemmhebel 18 und 19, die in ihrer jeweiligen Klemmstellung mit dem Trägerelement 7 und 8 zusammenwirken.

Bei dem gezeigten Ausführungsbeispiel ist in besonders vorteilhafter Weise ein einziges Betätigungsorgan 11 vorgesehen, mit dessen Hilfe die mehreren Trägerelemente 7, 8, 9 und 10 sowohl gemeinsam arretiert als auch gemeinsam aus dem arretierten Zustand gelöst werden können. Anstelle der genau vier verschiebbaren Trägerelemente 7, 8, 9 und 10 können im Rahmen der vorliegenden Erfindung auch mehr oder weniger als vier verstellbare Trägerelemente an dem Vorrichtungskörper 2 gelagert werden. Erfindungsgemäß wesentlich ist lediglich, dass mehrere verstellbare Trägerelemente vorhanden sind, d.h. wenigstens zwei Trägerelemente.

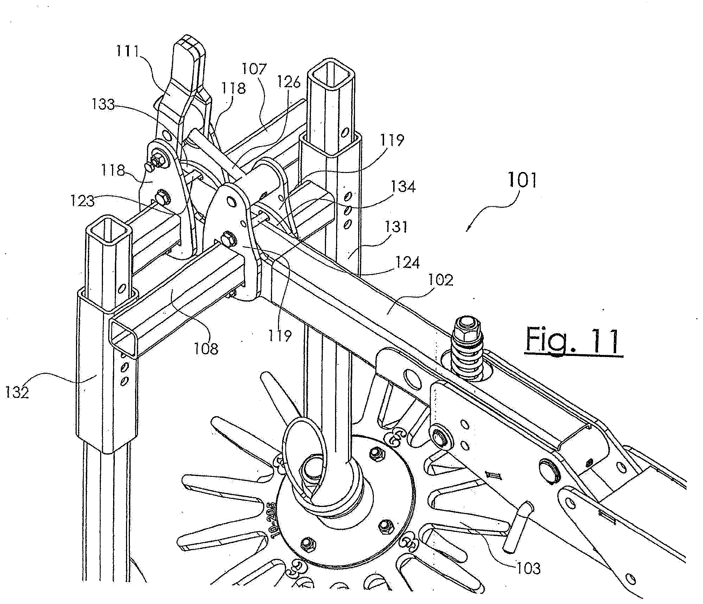

In den Fig. 11 bis 15 entsprechen gleiche Bezugszeichen gleichen Teilen des dargestellten, zweiten Ausführungsbeispiels der erfindungsgemäßen Vorrichtung 101.

In Fig. 11 ist die perspektivische Ansicht eines zweiten Ausführungsbeispiels in Form der erfindungsgemäßen Vorrichtung 101 gezeigt. Sie weist einen als Vierkantprofil ausgebildeten Vorrichtungskörper 102 auf, an dessen in Fig. 11 linkem Ende genau zwei Trägerelemente 107, 108 angebracht sind, bei denen es sich ebenso um Vierkantprofile handelt. Wie die Trägerelemente 7, 8, 9, 10 des ersten Ausführungsbeispiels erstrecken sich auch die Trägerelemente 107, 108 durch in dem Vorrichtungskörper 102 ausgebildete Führungsaufnahmen mit jeweiligen Führungsflächen, die den Fig. 11 bis 15 nicht zu sehen sind. Bei der Führungsaufnahme für das Trägerelement 107 bzw. 108 handelt es sich jeweils um ein Vierkantloch, welches den Vorrichtungskörper 102 an seinem in Fig. 11 linken Ende derart durchsetzt, dass das längliche Trägerelement 107 bzw. 108 so in die Führungsaufnahme gesteckt werden kann, dass es auf gegenüberliegenden Seiten des Vorrichtungskörpers 102 wie in Fig. 11 gezeigt herausschaut.

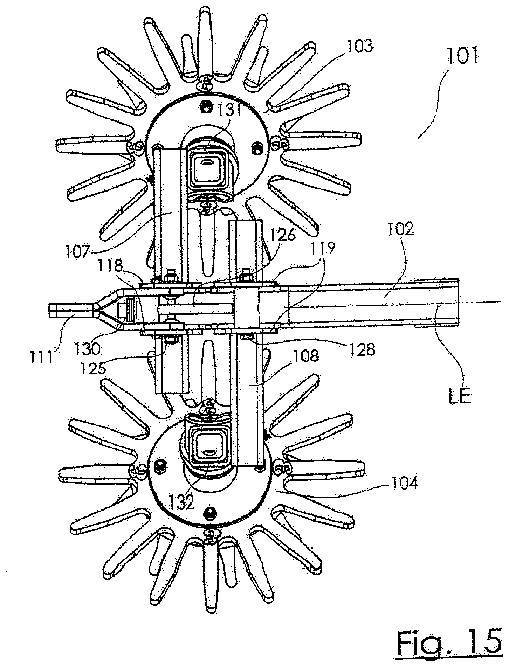

Wie sich aus einer Zusammenschau der Fig. 11 und 15 ergibt, ist an dem in Fig. 11 rechten bzw. dem in Fig. 15 oberen Ende des Trägerelements 107 eine Werkzeughülse 131 angebracht, in welcher ein landwirtschaftliches Arbeitswerkzeug 104 höhenverstellbar befestigt werden kann. Wie sich aus einer Zusammenschau der Fig. 11 und 15 ebenso ergibt, ist an dem in Fig. 11 linken bzw. dem in Fig. 15 unteren Ende des Trägerelements 108 eine Werkzeughülse 132 angebracht, in welcher ein weiteres, landwirtschaftliches Arbeitswerkzeug 104 höhenverstellbar befestigt werden kann. Bei dem gezeigten Ausführungsbeispiel handelt es sich bei den Arbeitswerkzeugen 103, 104 um Zinkensterne.

Die erfindungsgemäße Arretiereinrichtung umfasst bei dem zweiten Ausführungsbeispiel ein als Handhebel ausgebildetes Betätigungsorgan 111, zwei jeweils als Doppelhebel ausgebildete Klemmhebel 118 und 119 sowie ein als Zugstange ausgebildetes Zugelement 126. Die Klemmhebel 118, 119 umfassen jeweils zwei Teilhebel, die bei dem gezeigten Ausführungsbeispiel ihrerseits jeweils ein viereckiges Klemmloch aufweisen. Diese Klemmlöcher fluchten mit den jeweiligen Führungsaufnahmen in dem Vorrichtungskörper 102 und werden somit von dem jeweiligen Trägerelement 107, 108 durchsetzt.

Durch ein leichtes Verdrehen der Klemmhebel 118, 119 um eine Achse parallel zu der Längsachse des jeweiligen Trägerelements 118, 119 greifen die Lochwandungen des jeweiligen Klemmlochs an dem jeweiligen Trägerelement 107, 108 an und versuchen, es um seine jeweilige Längsachse zu drehen. Dies ist jedoch nicht möglich, da das jeweilige Trägerelement 107, 108 in der jeweiligen Führungsaufnahme des Vorrichtungskörpers 102 drehfest gehalten wird. Das von den Klemmhebeln 118, 119 auf das jeweilige Trägerelement 107, 108 aufgebrachte Drehmoment führt somit zu einem Verklemmen bzw. Verkannten des jeweiligen Trägerelements 107, 108 in der jeweiligen Führungsaufnahme des Vorrichtungskörpers 102. Dabei führt der Anpressdruck der Oberflächen des jeweiligen Trägerelements 107, 108 an die Führungsflächen der Führungsaufnahmen in dem Vorrichtungskörper 102 zu einer reibschlüssigen Arretierung bzw. Festlegung der Trägerelemente 107, 108 an dem Vorrichtungskörper 102.

Nachfolgend wird die Funktionsweise der Arretiereinrichtung des zweiten Ausführungsbeispiels erläutert:
Der Klemmhebel 118 ist mit Hilfe einer Drehachse 123 drehbar an dem Vorrichtungskörper 102 gelagert. In gleicher Weise ist der Klemmhebel 119 mit Hilfe einer Drehachse 124 drehbar an dem Vorrichtungskörper 102 gelagert. Hierzu sind an dem Vorrichtungskörper 102 Lagerböcke 133 und 134 angeschweißt. Bei dem gezeigten Ausführungsbeispiel sind die Drehachsen 123, 124 jeweils in einem Langloch gelagert, sodass die Drehachsen 123, 124 eine begrenzte, translatorische Bewegung ausführen können.

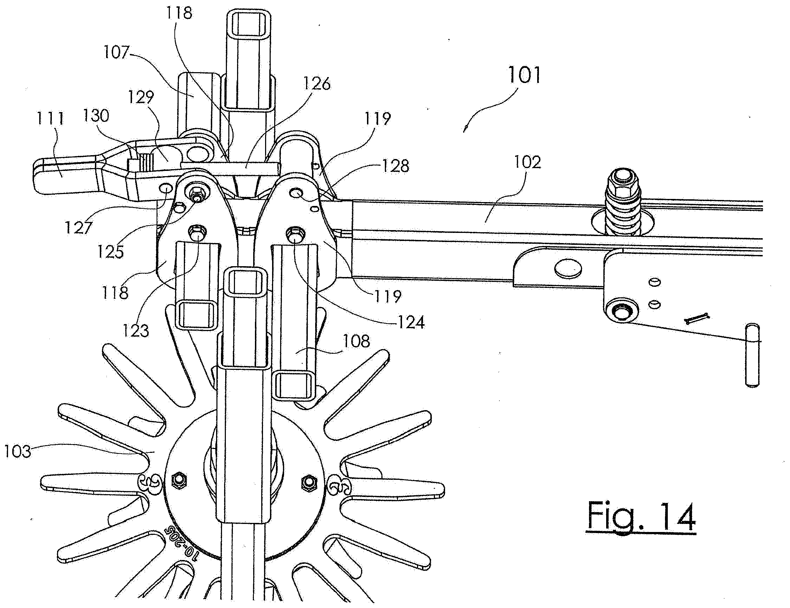

Wie beispielsweise in Fig. 14 zu sehen ist, ist das als Handhebel ausgebildete Betätigungsorgan 111 über ein Schwenkgelenk 125 mit dem oberen Ende des Klemmhebels 118 verbunden. Das Betätigungsorgan 111 ist des Weiteren über ein erstes Gelenk 127 mit dem in Fig. 14 linken Ende des Zugelements 126 verbunden. Das in Fig. 14 rechte Ende des Zugelements 126 ist über ein zweites Gelenk 128 mit dem oberen Ende des Klemmhebels 119 verbunden.

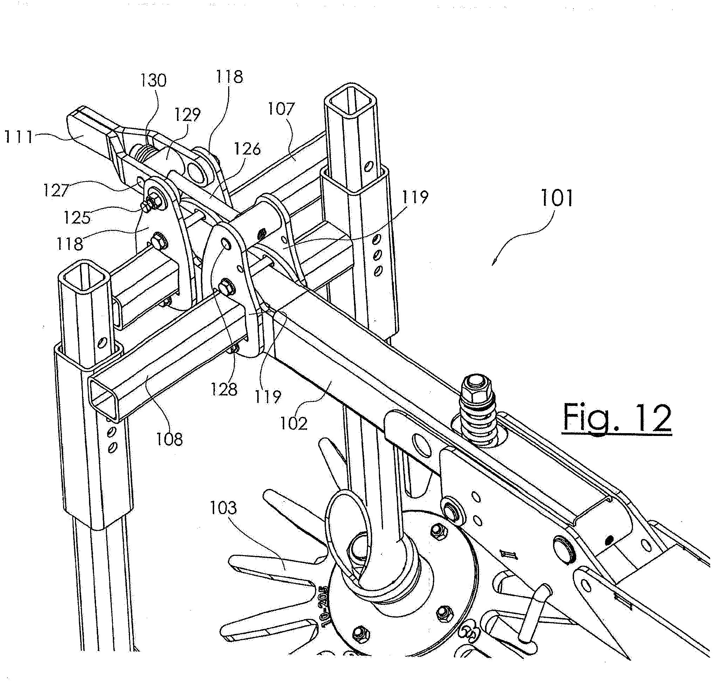

Wie unter Anderem in Fig. 12 zu erkennen ist, durchsetzt das Zugelement 126 ein hülsenartig ausgebildetes Gelenkelement 129 des ersten Gelenks 127. Auf der von dem Schwenkgelenk 125 abgewandten Seite des hülsenartigen Gelenkelements 129 stützt sich an dem in Fig. 12 linken Ende des Zugelements 126 eine Druckfeder 130 ab, die danach strebt, das Gelenkelement 129 auf dem Zugelement 126 in Richtung des zweiten Gelenks 128 an dem Klemmhebel 119 zu drücken.

Das Gelenkelement 129 ist in Längsrichtung des Zugelements 126 auf demselben verschiebbar und kann sich - wie es durch einen Vergleich der Fig. 11 mit der Fig. 12 nachvollziehbar ist - relativ zu dem Betätigungsorgan 111 um die Achse des ersten Gelenks 127 drehen. Gleichzeitig kann sich das Gelenkelement 129 relativ zu dem Betätigungsorgan 111 nicht linear bewegen, d.h. es bleibt im Hinblick auf seine koaxiale Lage mit der Achse des ersten Gelenks 127 relativ zu dem Betätigungsorgan 111 ortsfest.

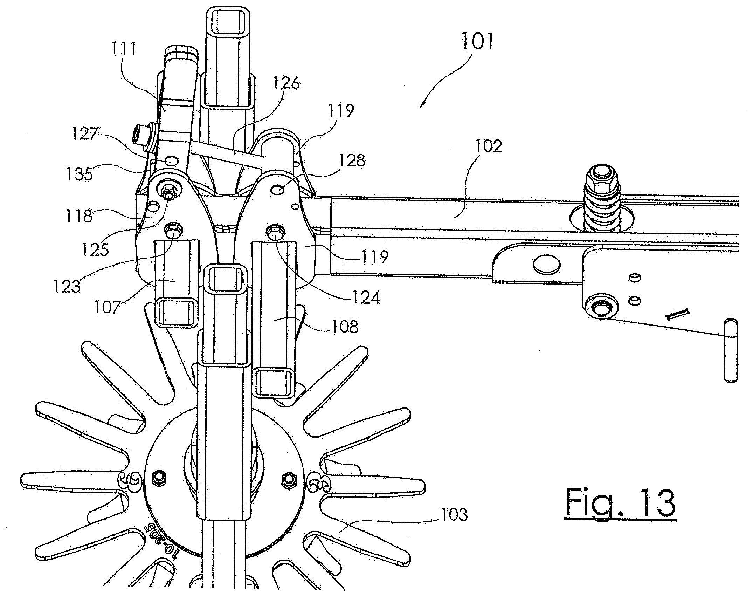

In den Fig. 11 und 13 befindet sich das Betätigungsorgan 111 in seiner Losstellung, sodass sich die Klemmhebel 118 und 119 jeweils in ihrer Freigabestellung befinden, in welcher sie die Trägerelemente 107 und 108 nicht in den Führungsaufnahmen des Vorrichtungskörpers 102 arretieren bzw. festklemmen. Der Abstand der Arbeitswerkzeuge 103, 104 von dem Vorrichtungskörper 102 kann in diesem Zustand durch lineares Verschieben der Trägerelemente 107, 108 in den Führungsaufnahmen des Vorrichtungskörpers 102 eingestellt werden.

Ist der gewünschte Abstand der Arbeitswerkzeuge 103, 104 von der in Fig. 15 gekennzeichneten Längsebene LE des Vorrichtungskörpers 102 eingestellt, so können die Trägerelemente 107, 108 durch Betätigen der Arretiereinrichtung fixiert werden. Hierzu wird das Betätigungsorgan 111 von Hand von seiner in den Fig. 11 und 13 gezeigten Losstellung in seine in den Fig. 12, 14 und 15 gezeigte Arretierstellung gebracht. Dabei wird es um etwas mehr als 90° um das Schwenkgelenk 125 verschwenkt.

Während dieser Schwenkbewegung des Betätigungsorgans 111 vergrößert sich der Abstand des ersten Gelenks 127 und somit des Gelenkelements 129 von dem zweiten Gelenk 128. Das Gelenkelement 129 bewegt sich in Fig. 11 nach links. Dadurch wird die Druckfeder 130 zunehmend zusammengedrückt, bis der Abstand zwischen dem ersten Gelenk 127 und dem zweiten Gelenk 128 seinen Maximalbetrag erreicht hat. Dieser Zustand der Relativlage zwischen erstem Gelenk 127 und zweitem Gelenk 128 wird als Totpunktstellung bezeichnet.

Die darüberhinausgehende Schwenkbewegung des Betätigungsorgans 111 bis in die in den Fig. 12, 14 und 15 gezeigte Arretierstellung führt zu einer leichten Verringerung des Abstandes zwischen dem ersten Gelenk 127 und dem zweiten Gelenk 128, sodass sich die Druckfeder 130 wieder ein wenig entspannt. Die über den Totpunkt hinausgehende Schwenkbewegung des Betätigungsorgans 111 wird durch das in Fig. 13 gekennzeichnete Anschlagelement 135 begrenzt.

In der so erreichten Arretierstellung des Betätigungsorgans 111 gemäß der Fig. 12, 14 und 15 werden die oberen Enden der beiden Klemmhebel 118, 119 zueinander hingezogen. Dadurch wird das Klemmelement 118 in Fig. 14 mit einem Drehmoment im Uhrzeigersinn um die Drehachse 123 beaufschlagt. Das Klemmelement 119 hingegen wird in Fig. 14 mit einem Drehmoment im Gegenuhrzeigersinn um die Drehachse 124 beaufschlagt. Dementsprechend drückt der Klemmhebel 118 das Trägerelement 107 in Fig. 14 nach links, während der Klemmhebel 119 das Trägerelement 108 in Fig. 14 nach rechts drückt. Eine Bewegung der Trägerelemente 107, 108 nach links bzw. rechts ist jedoch nicht möglich, da die Trägerelemente 107, 108 in den Führungsaufnahmen des Vorrichtungskörpers 102 gehalten werden. Somit wird in den Fig. 12, 14 und 15 eine reibschlüssige Festlegung bzw. Klemmung der Trägerelemente 107, 108 bewirkt.

Aufgrund der unrunden Form sowohl der Klemmlöcher in den Klemmhebeln 118, 119 als auch der Querschnitte der Trägerelemente 107, 108 besteht die Möglichkeit, das zweite Ausführungsbeispiel dahingehend zu modifizieren, dass die Drehachsen 123, 124 der Klemmhebel 118, 119 ersatzlos weggelassen werden. Die Vierkantform der Klemmlöcher in den Klemmhebeln 118, 119 als auch der Querschnitte der Trägerelemente 107, 108 verhindert dann, dass die oberen Enden der Klemmhebel 118, 119 bis zu einem Kontakt miteinander zueinander hingezogen werden.

Zu beachten ist bei dieser Modifikation, dass die Arretiereinrichung umfassend das Betätigungsorgan 111, die Klemmhebel 118, 119 und das Zugelement 126 nach dem vollständigen Herausziehen der Trägerelemente 107, 108 aus den Führungsaufnahmen des Vorrichtungskörpers 102 nicht mehr mechanisch mit dem Vorrichtungskörper 102 verbunden sind. Die erfindungsgemäße Funktion, d.h. das gemeinsame Lösen bzw. das gemeinsame Festlegen der Trägerelemente 107, 108 von bzw. an dem Vorrichtungskörper 102, würde jedoch nach wie vor erreicht werden.

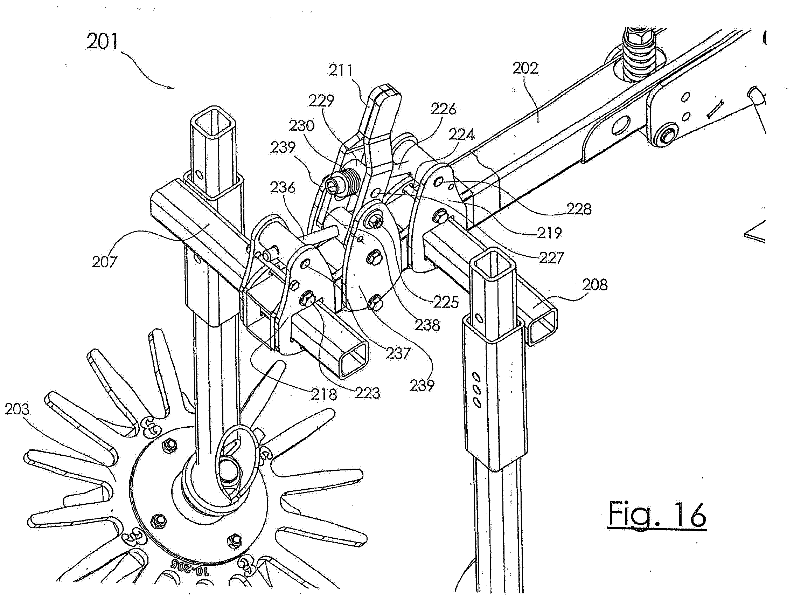

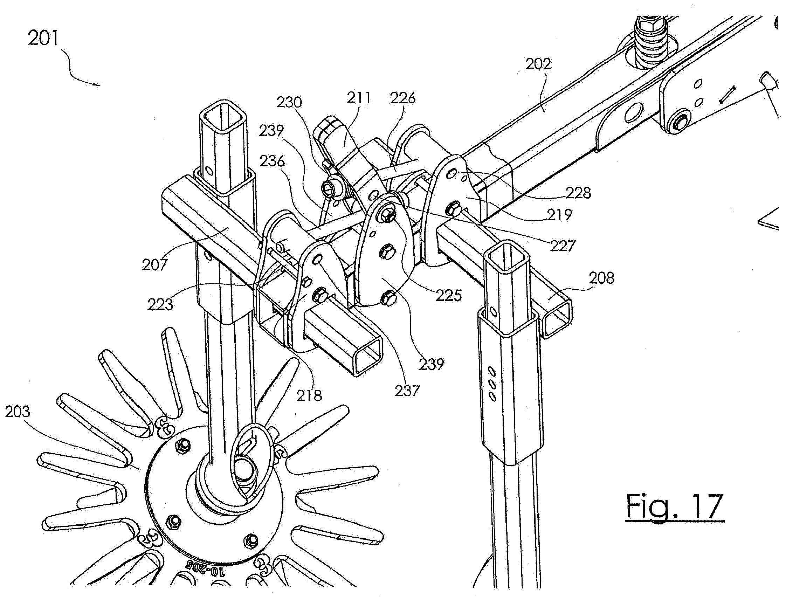

Die Fig. 16 und 17 zeigen ein drittes Ausführungsbeispiel der vorliegenden Erfindung in Form der erfindungsgemäßen Vorrichtung 201. Im Vergleich zu den Bezugszeichen des zweiten Ausführungsbeispiels gemäß den Fig. 11 bis 15 werden in Fig. 16 und 17 Bezugszeichen verwendet, die an der ersten ihrer drei Stellen eine "2" anstelle einer "1" aufweisen. Sofern in den Fig. 16 und 17 Bezugszeichen verwendet werden, die in ihrer zweiten und dritten Stelle den Bezugszeichen in den Fig. 11 bis 15 des zweiten Ausführungsbeispiels entsprechen, haben die in den Fig. 16 und 17 entsprechend gekennzeichneten Teile dieselbe Funktion wie diejenigen Teile des zweiten Ausführungsbeispiels, die in den Fig. 11 bis 15 mit derselben Ziffer in der zweiten und dritten Stelle ihres Bezugszeichens gekennzeichnet sind. Zur Vermeidung von Wiederholungen wird daher nachfolgend nur auf die wesentlichen Unterschiede zwischen dem zweiten und dem dritten Ausführungsbeispiel eingegangen.

In den Fig. 16 und 17 ist zu erkennen, dass das hebelartige Betätigungsorgan 211 in einem Zwischenraum zwischen dem ersten Klemmhebel 218 und dem zweiten Klemmhebel 219 angeordnet ist. Hierzu ist das Betätigungsorgan 211 um ein Schwenkgelenk 225 drehbar an zwei Lagerplatten 239 gelagert, die auf gegenüberliegenden Seiten des Vorrichtungskörpers 202 drehfest befestigt sind. Ein als Zugstange ausgebildetes, erstes Zugelement 226 ist einerseits über das erste Gelenk 227 gelenkig mit dem Betätigungsorgan 211 und andererseits über ein zweites Gelenk 228 gelenkig mit dem in Fig. 16 oberen Ende des zweiten Klemmhebels 219 verbunden.

Ein als Zugstange ausgebildetes, zweites Zugelement 236 ist einerseits über ein drittes Gelenk 237 gelenkig mit dem in Fig. 16 oberen Ende des ersten Klemmhebels 218 verbunden und andererseits über ein viertes Gelenk 238 gelenkig mit dem Betätigungsorgan 211 verbunden. Wie in den Fig. 16 und 17 zu erkennen ist, liegen das erste Gelenk 227 und das vierte Gelenk 238 auf gegenüberliegenden Seiten des Schwenkgelenks 225, um welches das Betätigungsorgan 211 verschwenkt werden kann.

Die Wirkungsweise des Betätigungsorgans 211, der ersten Zugstange 226, des ersten Gelenks 227, des zweiten Gelenks 228, des Schwenkgelenks 225 und der Druckfeder 230 ist dieselbe wie sie bereits voranstehend in Zusammenhang mit dem zweiten Ausführungsbeispiel beschrieben wurde.

Wird das Betätigungsorgan 211 in Fig. 16 nach links um das Schwenkgelenk 225 geschwenkt, so durchläuft es die in Fig. 17 gezeigte Zwischenposition auf seinem Weg in die für das dritte Ausführungsbeispiel nicht gezeigte Arretierstellung. Bei dieser Schwenkbewegung bewegt sich das vierte Gelenk 238 in den Fig. 16 und 17 nach rechts. Als Folge davon zieht das zweite Zugelement 236, das über das dritte Gelenk 237 mit dem oberen Ende des ersten Klemmhebels 218 verbunden ist, genau dieses obere Ende nach rechts.

Wegen der im dritten Ausführungsbeispiel vorhandenen Drehachsen 223, 224 zum Lagern der Klemmhebel 218, 219 an dem Vorrichtungskörper 202 werden die beiden länglichen Trägerelemente 207, 208 in entgegengesetzte Richtungen gegen Führungsflächen der Führungsaufnahmen in dem Vorrichtungskörper 202 gedrückt. Dabei wird das Trägerelement 207 in den Fig. 16 und 17 im Wesentlichen nach links und das Trägerelement 208 im Wesentlichen nach rechts gedrückt.

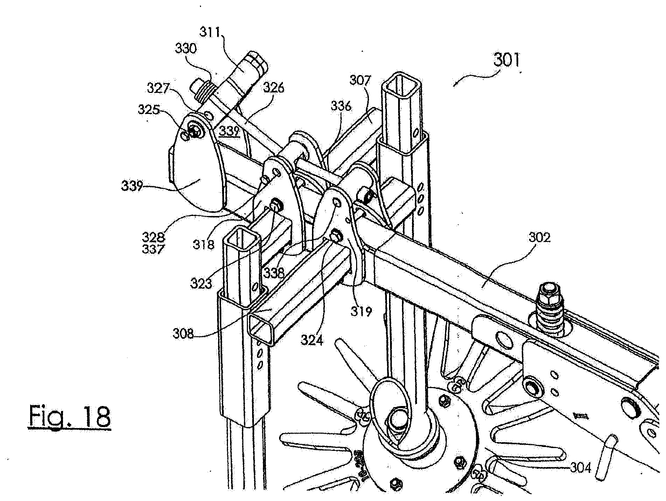

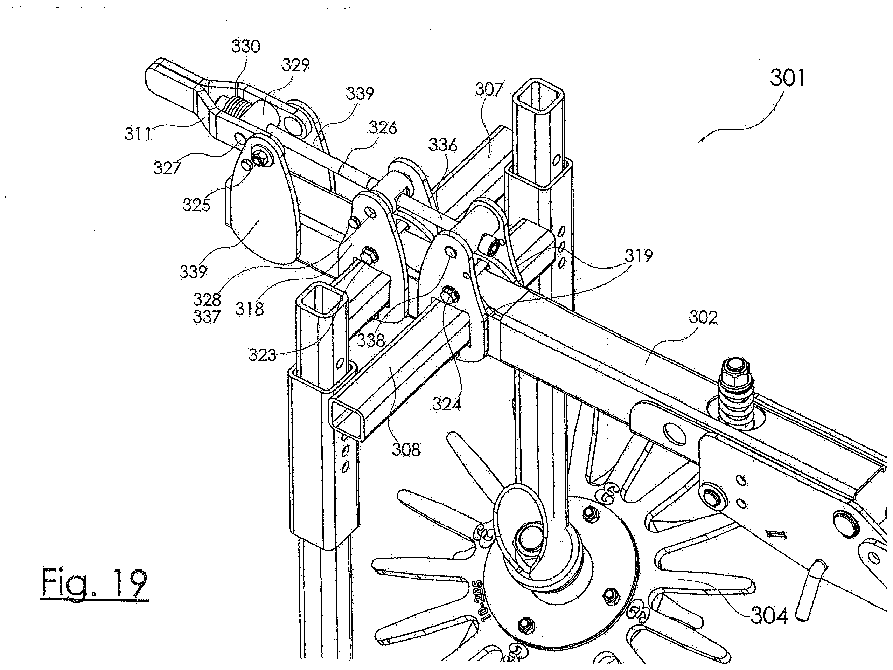

In den Fig. 18 und 19 ist ein viertes Ausführungsbeispiel der vorliegenden Erfindung in Form der Vorrichtung 301 gezeigt. Im Vergleich zu den Bezugszeichen des zweiten Ausführungsbeispiels gemäß den Fig. 11 bis 15 werden in Fig. 18 und 18 Bezugszeichen verwendet, die an der ersten ihrer drei Stellen eine "3" anstelle einer "1" aufweisen. Sofern in den Fig. 18 und 19Bezugszeichen verwendet werden, die in ihrer zweiten und dritten Stelle den Bezugszeichen in den Fig. 11 bis 15 des zweiten Ausführungsbeispiels entsprechen, haben die in den Fig. 18 und 19 entsprechend gekennzeichneten Teile dieselbe Funktion wie diejenigen Teile des zweiten Ausführungsbeispiels, die in den Fig. 11 bis 15 mit derselben Ziffer in der zweiten und dritten Stelle ihres Bezugszeichens gekennzeichnet sind. Zur Vermeidung von Wiederholungen wird daher nachfolgend nur auf die wesentlichen Unterschiede zwischen dem zweiten und dem vierten Ausführungsbeispiel eingegangen.

Bei der in den Fig. 18 und 19 gezeigten Vorrichtung 301 ist das Betätigungsorgan 311 links neben den beiden Klemmhebeln 318 und 319 angeordnet. Ähnlich wie bei dem dritten Ausführungsbeispiel ist das hebelartige Betätigungsorgan 311 über ein Schwenkgelenk 325 schwenkbar an zwei Lagerplatten 339 gelagert, die ihrerseits drehfest auf gegenüberliegenden Seiten des Vorrichtungskörpers 302 befestigt sind. Ein als Zugstange ausgebildetes, erstes Zugelement 326 ist über ein erstes Gelenk 327 gelenkig mit dem Betätigungsorgan 311 verbunden. Das andere Ende des ersten Zugelements 326 ist über ein zweites Gelenk 328 gelenkig mit dem ersten Klemmhebel 319 verbunden. Dabei sind wie beim zweiten Ausführungsbeispiel das erste Gelenk 327 und das Schwenkgelenk 325 voneinander beabstandet.

Wie in den Fig. 18 und 19 des Weiteren zu sehen ist, sind die oberen Enden der Klemmhebel 318 und 319 über ein zweites Zugelement 336 miteinander verbunden. Das in den Fig. 18 und 19 linke Ende des Zugelements 336 ist über ein drittes Gelenk 337 gelenkig mit dem ersten Klemmhebel 318 verbunden. Das andere Ende des Zugselements 336 ist über ein viertes Gelenk 238 mit dem oberen Ende des zweiten Klemmhebels 319 verbunden. Wie in den Fig. 18 und 19 zu erkennen ist, fallen die Gelenkachsen des zweiten Gelenks 328, d.h. der gelenkigen Verbindung des ersten Zugelements 326 mit dem ersten Klemmhebel 318, und des dritten Gelenks 337, d.h. der gelenkigen Verbindung des zweiten Zugelements 336 mit dem ersten Klemmhebel 318, aufeinander.

Die Wirkungsweise des Betätigungsorgans 311, des ersten Zugelements 326, des ersten Gelenks 327, des zweiten Gelenks 328, des Schwenkgelenks 325 und der Druckfeder 330 ist dieselbe wie sie voranstehend in Zusammenhang mit dem zweiten Ausführungsbeispiel beschrieben wurde.

Wird das Betätigungsorgan 311 von seiner in Fig. 18 zusehenden Losstellung um etwas mehr als 90° um das Schwenkgelenk 325 in seine in Fig. 19 zu sehende Arretierstellung verschwenkt, so wird nicht nur der erste Klemmhebel 318 im Gegenuhrzeigersinn um seine Drehachse 323 verschwenkt, sondern es wird mit Hilfe des zweiten Zugelements 336 auch der zweite Klemmhebel 319 in den Fig. 18 und 19 im Gegenuhrzeigersinn um seine Drehachse 324 verschwenkt.

Somit bewegen sich die oberen Enden der Klemmhebel 318 und 319 in Fig. 18 im Wesentlichen nach links, während die Trägerelemente 307 und 308 in den Fig. 18 und 19 beide in dieselbe Richtung nach rechts gegen Führungsflächen in den Führungsaufnahmen des Vorrichtungskörpers 302 gedrückt werden.

### BEZUGSZEICHENLISTE

- 1: Vorrichtung
- 2: Vorrichtungskörper
- 3: Arbeitswerkzeug
- 4: Arbeitswerkzeug
- 5: Arbeitswerkzeug
- 6: Arbeitswerkzeug
- 7: Trägerelement für Arbeitswerkzeug 3
- 8: Trägerelement für Arbeitswerkzeug 4
- 9: Trägerelement für Arbeitswerkzeug 6
- 10: Trägerelement für Arbeitswerkzeug 5
- 11: Betätigungsorgan
- 12: Führungsaufnahme für Trägerelement 7
- 13: Führungsaufnahme für Trägerelement 8
- 14: Führungsaufnahme für Trägerelemente 9 und 10
- 15: Führungsfläche der Führungsaufnahme 12
- 16: Führungsfläche der Führungsaufnahme 13
- 17: Führungsfläche der Führungsaufnahme 14
- 18: Klemmhebel für Trägerelement 7
- 19: Klemmhebel für Trägerelement 8
- 20: Klemmhebel für Trägerelemente 9 und 10
- 21: Klemmhebel für Trägerelemente 9 und 10
- 22: Durchgangsloch in Führungsaufnahme 13
- 23: Drehachse des Klemmhebels 18
- 24: Drehachse des Klemmhebels 19
- 25: Drehachse der Klemmhebel 20 und 21
- 26: Verbindungsstange
- 27: Gelenk Klemmhebel 18/Verbindungsstange 26
- 28: Gelenk Klemmhebel 19/Verbindungsstange 26
- 29: Gelenk Klemmhebel 20+21/Verbindungsstange 26
- 30: Dämpfungseinrichtung Klemmhebel 18/Verbindungsstange 26
- 31: Dämpfungseinrichtung Klemmhebel 19/Verbindungsstange 26
- 32: Dämpfungseinrichtung Klemmhebel 20/Verbindungsstange 26
- 33: Dämpfungseinrichtung Klemmhebel 21/Verbindungsstange 26
- 34: Abstützstange der Dämpfungseinrichtung 30
- 35: Abstützstange der Dämpfungseinrichtung 31
- 36: Abstützstange der Dämpfungseinrichtung 32
- 37: Abstützstange der Dämpfungseinrichtung 33
- 38: Druckfeder der Dämpfungseinrichtung 30
- 39: Druckfeder der Dämpfungseinrichtung 31
- 40: Druckfeder der Dämpfungseinrichtung 32
- 41: Druckfeder der Dämpfungseinrichtung 33
- 42 43: Nockensteuerfläche
- 44: Nockenachse
- 45: Stellhebel
- 46: Stellhebelachse
- 47: Angriffsfläche für Nockensteuerfläche 43
- 48: Ausgleichsglied
- 49: erstes Ausgleichsgelenk
- 50: zweites Ausgleichsgelenk
- 51: Schraubenschlüssel

- 101: Vorrichtung
- 102: Vorrichtungskörper
- 103: Arbeitswerkzeug
- 104: Arbeitswerkzeug
- 107: Trägerelement für Arbeitswerkzeug 103
- 108: Trägerelement für Arbeitswerkzeug 104
- 111: Betätigungsorgan
- 118: Klemmhebel für Trägerelement 107
- 119: Klemmhebel für Trägerelement 108
- 123: Drehachse des Klemmhebels 118
- 124: Drehachse des Klemmhebels 119
- 125: Schwenkgelenk
- 126: Zugelement
- 127: erstes Gelenk
- 128: zweites Gelenk
- 129: Gelenkelement des ersten Gelenks 127
- 130: Druckfeder
- 131: Werkzeuhülse
- 132: Werkzeuhülse
- 133: Lagerbock für Drehachse 123
- 134: Lagerbock für Drehachse 124
- 135: Anschlagelement

- 201: Vorrichtung
- 202: Vorrichtungskörper
- 203: Arbeitswerkzeug
- 204: Arbeitswerkzeug
- 207: Trägerelement für Arbeitswerkzeug 203
- 208: Trägerelement für Arbeitswerkzeug 204
- 211: Betätigungsorgan
- 218: Klemmhebel für Trägerelement 207
- 219: Klemmhebel für Trägerelement 208
- 223: Drehachse des Klemmhebels 218
- 224: Drehachse des Klemmhebels 219
- 225: Schwenkgelenk
- 226: Erstes Zugelement
- 227: erstes Gelenk
- 228: zweites Gelenk
- 229: Gelenkelement des ersten Gelenks 227
- 230: Druckfeder
- 236: Zweites Zugelement
- 237: Drittes Gelenk
- 238: Viertes Gelenk
- 239: Lagerplatten
- 301: Vorrichtung
- 302: Vorrichtungskörper
- 303: Arbeitswerkzeug
- 304: Arbeitswerkzeug
- 307: Trägerelement für Arbeitswerkzeug 303
- 308: Trägerelement für Arbeitswerkzeug 304
- 311: Betätigungsorgan
- 318: Klemmhebel für Trägerelement 307
- 319: Klemmhebel für Trägerelement 308
- 323: Drehachse des Klemmhebels 318
- 324: Drehachse des Klemmhebels 319
- 325: Schwenkgelenk
- 326: Erstes Zugelement
- 327: erstes Gelenk
- 328: zweites Gelenk
- 329: Gelenkelement des ersten Gelenks 327
- 330: Druckfeder
- 336: Zweites Zugelement
- 337: Drittes Gelenk
- 338: Viertes Gelenk
- 339: Lagerplatten

- BB: Bearbeitungsbreite zwischen benachbarten Nutzpflanzenreihen NR
- BD: Boden
- FR: Fahrtrichtung des Zugfahrzeugs
- LA: Längenabschnitt des Klemmhebels 20
- LE: Längsebene des Vorrichtungskörpers 2, 102, 202, 302
- NR: Nutzpflanzenreihe
- P: Drehrichtung des Betätigungsorgans 11

## Patentansprüche

1. Vorrichtung (1; 101; 201; 301) zum Bearbeiten eines landwirtschaftlichen Bodens durch Bewegen der Vorrichtung (1; 101; 201; 301) entlang des Bodens in einer Fahrtrichtung eines Zugfahrzeuges zum Ziehen der Vorrichtung (1; 101; 202; 301), wobei die Vorrichtung (1; 101; 202; 301) einen Vorrichtungskörper (2; 102; 202; 302) mit einer Längsebene (LE), die im Wesentlichen parallel zu der Fahrtrichtung verläuft, mehrere Arbeitswerkzeuge (3, 4, 5, 6; 103, 104; 203, 204; 303, 304) und mehrere, längliche Trägerelemente (7, 8, 9, 10; 107, 108; 207, 208; 307, 308), welche die Arbeitswerkzeuge (3, 4, 5, 6; 103, 104; 203, 204; 303, 304) tragen und an dem Vorrichtungskörper (2; 102; 202; 302) gelagert sind, aufweist, wobei die Trägerelemente (7, 8, 9, 10; 107, 108; 207, 208; 307, 308) jeweils quer zu der Längsebene (LE) bewegbar sind, so dass das jeweilige Arbeitswerkzeug (3, 4, 5, 6; 103, 104; 203, 204; 303, 304) in verschiedenen Abständen von der Längsebene (LE) angeordnet werden kann, und wobei die Vorrichtung (1; 101; 201; 301) eine Arretiereinrichtung zum Arretieren der Trägerelemente (7, 8, 9, 10; 107, 108; 207, 208; 307, 308) an dem Vorrichtungskörper (2; 102; 202; 302) aufweist, wobei die Arretiereinrichtung ein Betätigungsorgan (11; 111; 211; 311) umfasst, durch dessen Betätigung die Arretierung der mehreren Trägerelemente (7, 8, 9, 10; 107, 108; 207, 208; 307, 308) an dem Vorrichtungskörper (2; 102; 202; 302) gemeinsam lösbar ist oder die mehreren Trägerelemente (7, 8, 9, 10; 107, 108; 207, 208; 307, 308) gemeinsam an dem Vorrichtungskörper (2; 102; 202; 302) festlegbar sind,
**dadurch gekennzeichnet, dass**
der Vorrichtungskörper (2; 101; 201; 301) mehrere Führungsaufnahmen (12, 13, 14) mit jeweiligen Führungsflächen (15, 16, 17) aufweist, wobei in den Führungsaufnahmen (12, 13, 14) jeweils wenigstens eines der Trägerelemente (7, 8, 9, 10; 107, 108; 207, 208; 307, 308) entlang der jeweiligen Führungsfläche (15, 16, 17) verschiebbar geführt ist, wobei die Arretiereinrichtung mehrere Klemmhebel (18, 19, 20, 21; 118, 119; 218, 219; 318, 319) umfasst und jeder der mehreren Führungsaufnahmen (12, 13, 14) wenigstens einer der mehreren Klemmhebel (18, 19, 20, 21; 118, 119; 218, 219; 318, 319) zugeordnet ist, und wobei der jeweilige Klemmhebel (18, 19, 20, 21; 118, 119; 218, 219; 318, 319) durch Betätigen des Betätigungsorgans (11; 111; 211; 311) von einer Klemmstellung, in welcher er das jeweilige Trägerelement (7, 8, 9, 10; 107, 108; 207, 208; 307, 308) gegen die jeweilige Führungsfläche (15, 16, 17) der jeweiligen Führungsaufnahme (12, 13, 14) drückt und es dadurch reibschlüssig in der jeweiligen Führungsaufnahme (12, 13, 14) unverschiebbar festlegt, in eine Freigabestellung, in welcher er das jeweilige Trägerelement (7, 8, 9, 10; 107, 108; 207, 208; 307, 308) freigibt, so dass es in der jeweiligen Führungsaufnahme (12, 13, 14) entlang der jeweiligen Führungsfläche (15, 16, 17) verschiebbar ist, und/oder umgekehrt bewegbar ist.

2. Vorrichtung (1; 101) nach Anspruch 1,
**dadurch gekennzeichnet, dass**
mittels des Betätigungsorgans (11; 111; 211; 311) sowohl die Arretierung der mehreren Trägerelemente (7, 8, 9, 10; 107, 108; 207, 208; 307, 308) an dem Vorrichtungskörper (2; 102; 202; 302) gemeinsam lösbar ist als auch die mehreren Trägerelemente (7, 8, 9, 10; 107, 108; 207, 208; 307; 308) gemeinsam an dem Vorrichtungskörper (2; 102; 202; 302) festlegbar sind.

3. Vorrichtung nach Anspruch 1 oder 2,
**dadurch gekennzeichnet, dass**
die Führungsaufnahmen (12, 13, 14) jeweils von einer Führungshülse gebildet werden, die wenigstens ein Durchgangsloch (22) aufweist, durch welches der jeweilige Klemmhebel (18, 19, 20, 21) zum Festlegen des jeweiligen Trägerelements (7, 8, 9, 10) hindurch greifen kann.

4. Vorrichtung nach einem der vorangehenden Ansprüche,
**dadurch gekennzeichnet, dass**
die mehreren Klemmhebel (18, 19, 20, 21; 118, 119; 218, 219; 318, 319) um eine jeweilige Drehachse (23, 24, 25; 123, 124; 223, 224; 323, 324) drehbar an dem Vorrichtungskörper (2; 102; 202; 302) gelagert sind.

5. Vorrichtung nach Anspruch 4,
**dadurch gekennzeichnet, dass**
die Arretiereinrichtung wenigstens eine Verbindungsstange (26) umfasst, wobei jeder der mehreren Klemmhebel (18, 19, 20, 21) über ein jeweiliges Gelenk (27, 28, 29) derart mit der Verbindungsstange (26) gelenkig verbunden ist, dass ein Längenabschnitt (LA) des jeweiligen Klemmhebels (18, 19, 20, 21), der zwischen der jeweiligen Drehachse (23, 24, 25) und dem jeweiligen Gelenk (27, 28, 29) liegt, in der Klemmstellung zum Festlegen des jeweiligen Trägerelements (7, 8, 9, 10) dient.

6. Vorrichtung nach Anspruch 5,
**dadurch gekennzeichnet, dass**
die Arretiereinrichtung mehrere Dämpfungseinrichtungen (30, 31, 32, 33) umfasst, die jeweils zwischen der Verbindungsstange (26) und dem jeweiligen Klemmhebel (18, 19, 20, 21) wirkend angeordnet sind.

7. Vorrichtung nach Anspruch 6,
**dadurch gekennzeichnet, dass**
die jeweilige Dämpfungseinrichtung (30, 31, 32, 33) eine Abstützstange (34, 35, 36, 37), die an dem jeweiligen Gelenk (27, 28, 29) gelenkig mit der Verbindungsstange (26) verbunden ist und den jeweiligen Klemmhebel (18, 19, 20, 21) derart durchsetzt, dass sie sich relativ zu ihm bewegen kann, und eine Druckfeder (38, 39, 40, 41) aufweist, wobei sich die Druckfeder (38, 39, 40, 41) einerseits an der Abstützstange (34, 35, 36, 37) und andererseits an dem jeweiligen Klemmhebel (18, 19, 20, 21) abstützt.

8. Vorrichtung nach einem der vorangehenden Ansprüche,
**dadurch gekennzeichnet, dass**
das Betätigungsorgan (11) ein Nockenelement mit einer Nockensteuerfläche (43) ist, das um eine Nockenachse (44) drehbar an dem Vorrichtungskörper (2) gelagert ist, und die Arretiereinrichtung einen Stellhebel (45) umfasst, der um eine Stellhebelachse (46) drehbar an dem Vorrichtungskörper (2) gelagert ist, wobei der Stellhebel (45) auf einer Seite der Stellhebelachse (46) eine Angriffsfläche (47) aufweist, an welcher die Nockensteuerfläche (43) angreift.

9. Vorrichtung nach Anspruch 8 in Verbindung mit Anspruch 5,
**dadurch gekennzeichnet, dass**
die Arretiereinrichtung wenigstens ein Ausgleichsglied (48) umfasst, welches einerseits über ein erstes Ausgleichsgelenk (49) gelenkig mit der Verbindungsstange (26) und andererseits über ein zweites Ausgleichsgelenk (50) auf einer der Angriffsfläche (47) abgewandten Seite der Stellhebelachse (46) gelenkig mit dem Stellhebel (45) verbunden ist.

10. Vorrichtung nach Anspruch 8 in Verbindung mit Anspruch 5,
**dadurch gekennzeichnet, dass**
das erste Ausgleichsgelenk (49) mit dem Gelenk (27) zusammenfällt, welches die Verbindungsstange (26) mit demjenigen Klemmhebel (18) gelenkig verbindet, der am nächsten an dem Stellhebel (45) angeordnet ist.

11. Vorrichtung nach Anspruch 4,
**dadurch gekennzeichnet, dass**
das Betätigungsorgan (111; 211) derart mit einem ersten und einem zweiten Klemmhebel (118, 119; 218, 219) wirkverbunden ist, dass diejenigen Enden des ersten und zweiten Klemmhebels (118, 119; 218, 219), die von den Trägerelementen (107, 108; 207, 208) abgewandt sind, in der jeweiligen Klemmstellung zueinander hingezogen werden, so dass die dem ersten und zweiten Klemmhebel (118, 119; 218. 219) zugeordneten Trägerelemente (107, 108; 207, 208) in der Klemmstellung voneinander weg gegen Führungsflächen der Führungsaufnahmen gedrückt werden.

12. Vorrichtung nach einem der vorangehenden Ansprüche,
**dadurch gekennzeichnet, dass**
das Betätigungsorgan (111; 211) derart mit einem ersten und einem zweiten Klemmhebel (118, 119; 218, 219) wirkverbunden ist, dass diejenigen Enden des ersten und zweiten Klemmhebels (118, 119; 218, 219), die von den Trägerelementen (107, 108; 207, 208) abgewandt sind, in der jeweiligen Klemmstellung zueinander hingezogen werden, so dass die dem ersten und zweiten Klemmhebel (118, 119; 218, 219) zugeordneten Trägerelemente (107, 108; 207, 208) in der Klemmstellung ebenso zueinander hin und damit gegen Führungsflächen der Führungsaufnahmen gedrückt werden.

13. Vorrichtung nach Anspruch 11 oder 12,
**dadurch gekennzeichnet, dass**
das Betätigungsorgan (111) über ein Schwenkgelenk (125) gelenkig mit dem ersten Klemmhebel (118) verbunden ist und ein Zugelement (126) über ein erstes Gelenk (127) mit dem Betätigungsorgan (111) sowie über ein zweites Gelenk (128) mit dem zweiten Klemmhebel (119) verbunden ist, wobei das erste Gelenk (127) und das Schwenkgelenk (125) voneinander beabstandet sind, und wobei beim Verschwenken des Betätigungsorgans (111) um die Achse des Schwenkgelenks (125) von einer Losstellung, in welcher sich die Klemmhebel (118, 119) in ihrer Freigabestellung befinden, in eine Arretierstellung, in welcher sich die Klemmhebel (118, 119) in ihrer Klemmstellung befinden, ein Abstand des ersten Gelenks (127) von dem zweiten Gelenk (128) entgegen einer elastischen Rückstellkraft zunächst zunimmt, dann in einer Totpunktstellung des Betätigungsorgans (111) einen Maximalwert erreicht und schließlich auf Grund der Wirkung der elastischen Rückstellkraft wieder abnimmt.

14. Vorrichtung nach Anspruch 11 oder 12,
**dadurch gekennzeichnet, dass**
das Betätigungsorgan (211) in einem Zwischenraum zwischen dem ersten und dem zweiten Klemmhebel (218, 219) über ein Schwenkgelenk (225) gelenkig an dem Vorrichtungskörper (202) gelagert ist, wobei ein erstes Zugelement (226) über ein erstes Gelenk (227) mit dem Betätigungsorgan (211) sowie über ein zweites Gelenk (228) mit dem zweiten Klemmhebel (219) verbunden ist, wobei das erste Gelenk (227) und das Schwenkgelenk (227) voneinander bebstandet sind, wobei ein zweites Zugelement (236) über ein drittes Gelenk (237) mit dem ersten Klemmhebel (218) sowie über ein viertes Gelenk (238) mit dem Betätigungsorgan (211) verbunden ist, wobei das erste Gelenk (227) und das vierte Gelenk (238) auf gegenüberliegenden Seiten des Schwenkgelenks (225) angeordnet sind, und wobei beim Verschwenken des Betätigungsorgans (211) um die Achse des Schwenkgelenks (225) von einer Losstellung, in welcher sich die Klemmhebel (218, 219) in ihrer Freigabestellung befinden, in eine Arretierstellung, in welcher sich die Klemmhebel (218, 219) in ihrer Klemmstellung befinden, ein Abstand des ersten Gelenks (227) von dem zweiten Gelenk (228) entgegen einer elastischen Rückstellkraft zunächst zunimmt, dann in einer Totpunktstellung des Betätigungsorgans (211) einen Maximalwert erreicht und schließlich auf Grund der Wirkung der elastischen Rückstellkraft wieder abnimmt und das zweite Zugelement (236) den ersten Klemmhebel (218) in Richtung des zweiten Klemmhebels (219) zieht.

15. Vorrichtung nach Anspruch 4,
**dadurch gekennzeichnet, dass**
das Betätigungsorgan (311) derart mit einem ersten und einem zweiten Klemmhebel (318, 319) wirkverbunden ist, dass diejenigen Enden des ersten und zweiten Klemmhebels (318, 319), die von den Trägerelementen (307, 308) abgewandt sind, in der jeweiligen Klemmstellung in dieselbe Richtung gezogen werden, so dass die dem ersten und zweiten Klemmhebel (318, 319) zugeordneten Trägerelemente (307, 308) in der Klemmstellung in eine dieser Richtung entgegengesetzte Richtung gegen Führungsflächen der Führungsaufnahmen gedrückt werden.

16. Vorrichtung nach einem der vorangehenden Ansprüche,
**dadurch gekennzeichnet, dass**
das Betätigungsorgan (311) derart mit einem ersten und einem zweiten Klemmhebel (318, 319) wirkverbunden ist, dass diejenigen Enden des ersten und zweiten Klemmhebels (318, 319), die von den Trägerelementen (307, 308) abgewandt sind, in der jeweiligen Klemmstellung in dieselbe Richtung gezogen werden, so dass die dem ersten und zweiten Klemmhebel (318, 319) zugeordneten Trägerelemente (307, 308) ebenso in diese Richtung und damit gegen Führungsflächen der Führungsaufnahmen gedrückt werden.

17. Vorrichtung nach Anspruch 15 oder 16,
**dadurch gekennzeichnet, dass**
das Betätigungsorgan (311) außerhalb eines Zwischenraums zwischen dem ersten und dem zweiten Klemmhebel (318, 319) über ein Schwenkgelenk (325) gelenkig an dem Vorrichtungskörper (302) gelagert ist, wobei ein erstes Zugelement (326) über ein erstes Gelenk (327) mit dem Betätigungsorgan (311) sowie über ein zweites Gelenk (328) mit dem ersten Klemmhebel (319) verbunden ist, wobei das erste Gelenk (327) und das Schwenkgelenk (327) voneinander bebstandet sind, wobei ein zweites Zugelement (336) über ein drittes Gelenk (337) mit dem ersten Klemmhebel (318) sowie über ein viertes Gelenk (238) mit dem zweiten Klemmhebel (319) verbunden ist, und wobei beim Verschwenken des Betätigungsorgans (311) um die Achse des Schwenkgelenks (325) von einer Losstellung, in welcher sich die Klemmhebel (318, 319) in ihrer Freigabestellung befinden, in eine Arretierstellung, in welcher sich die Klemmhebel (318, 319) in ihrer Klemmstellung befinden, ein Abstand des ersten Gelenks (327) von dem zweiten Gelenk (328) entgegen einer elastischen Rückstellkraft zunächst zunimmt, dann in einer Totpunktstellung des Betätigungsorgans (311) einen Maximalwert erreicht und schließlich auf Grund der Wirkung der elastischen Rückstellkraft wieder abnimmt und das zweite Zugelement (336) den zweiten Klemmhebel (319) in Richtung des ersten Klemmhebels (319) zieht.

18. Vorrichtung nach Anspruch 13, 14 oder 17,
**dadurch gekennzeichnet, dass**
das erste Gelenk (127; 227; 327) ein Gelenkelement (129; 229; 329) aufweist, das von dem Zugelement (126) bzw. dem ersten Zugelement (226; 336) derart durchsetzt ist, dass es in einer Längsrichtung des Zugelements (126) bzw. des ersten Zugelements (226; 326) relativ zu diesem bewegbar ist, und die elastische Rückstellkraft von wenigstens einer Druckfeder (130; 230; 330) bewirkt wird, die sich an dem Zugelement (126) bzw. an dem ersten Zugelement (226; 326) abstützt und das Gelenkelement (129; 229; 339) in Richtung des zweiten Gelenks (128; 228; 328) drückt.

## Claims

1. Apparatus (1; 101; 201; 301) for working an agricultural soil by moving the apparatus (1; 101; 201; 301) along the soil in a direction of travel of a tractor vehicle for towing the apparatus (1; 101; 202; 301), wherein the apparatus (1; 101; 202; 301) has an apparatus body (2; 102; 202; 302) having a longitudinal plane (LE) which runs substantially parallel to the direction of travel, a plurality of working tools (3, 4, 5, 6; 103, 104; 203, 204; 303, 304) and a plurality of elongate carrier elements (7, 8, 9, 10; 107, 108; 207, 208; 307, 308) which carry the working tools (3, 4, 5, 6; 103, 104; 203, 204; 303, 304) and are mounted on the apparatus body (2; 102; 202; 302), wherein the carrier elements (7, 8, 9, 10; 107, 108; 207, 208; 307, 308) are each movable transversely to the longitudinal plane (LE) so that the respective working tool (3, 4, 5, 6; 103, 104; 203, 204; 303, 304) can be arranged at different distances from the longitudinal plane (LE), and wherein the apparatus (1; 101; 201; 301) has a locking device for locking the carrier elements (7, 8, 9, 10; 107, 108; 207, 208; 307, 308) on the apparatus body (2; 102; 202; 302), wherein the locking device comprises an operating member (11; 111; 211; 311), by means of the operation of which the locking of the plurality of carrier elements (7, 8, 9, 10; 107, 108; 207, 208; 307, 308) on the apparatus body (2; 102; 202; 302) can jointly be released or the plurality of carrier elements (7, 8, 9, 10; 107, 108; 207, 208; 307, 308) can jointly be fixed on the apparatus body (2; 102; 202; 302),
**characterised in that**
the apparatus body (2; 101; 201; 301) has a plurality of guiding receivers (12, 13, 14) having respective guide faces (15, 16, 17), wherein in each case at least one of the carrier elements (7, 8, 9, 10; 107, 108; 207, 208; 307, 308) is guided in the guiding receivers (12, 13, 14) so as to be displaceable along the respective guide face (15, 16, 17), wherein the locking device comprises a plurality of clamping levers (18, 19, 20, 21; 118, 119; 218, 219; 318, 319) and at least one of the plurality of clamping levers (18, 19, 20, 21; 118, 119; 218, 219; 318, 319) is associated with each of the plurality of guiding receivers (12, 13, 14), and wherein the respective clamping lever (18, 19, 20, 21; 118, 119; 218, 219; 318, 319), by operation of the operating member (11; 111; 211; 311), is movable from a clamping position, in which it presses the respective carrier element (7, 8, 9, 10; 107, 108; 207, 208; 307, 308) against the respective guide face (15, 16, 17) of the respective guiding receiver (12, 13, 14) and thereby fixes it in a non-displaceable manner in the respective guiding receiver (12, 13, 14) by frictional engagement, into a release position, in which it releases the respective carrier element (7, 8, 9, 10; 107, 108; 207, 208; 307, 308) so that it is displaceable in the respective guiding receiver (12, 13, 14) along the respective guide face (15, 16, 17), and/or vice versa.

2. Apparatus (1; 101) according to claim 1,
**characterised in that**
by means of the operating member (11; 111; 211; 311), both the locking of the plurality of carrier elements (7, 8, 9, 10; 107, 108; 207, 208; 307, 308) on the apparatus body (2; 102; 202; 302) can jointly be released and the plurality of carrier elements (7, 8, 9, 10; 107, 108; 207, 208; 307; 308) can jointly be fixed on the apparatus body (2; 102; 202; 302).

3. Apparatus according to claim 1 or 2,
**characterised in that**
the guiding receivers (12, 13, 14) are each formed by a guide sleeve which has at least one through-hole (22) through which the respective clamping lever (18, 19, 20, 21) for fixing the respective carrier element (7, 8, 9, 10) can engage.

4. Apparatus according to any one of the preceding claims,
**characterised in that**
the plurality of clamping levers (18, 19, 20, 21; 118, 119; 218, 219; 318, 319) are mounted on the apparatus body (2; 102; 202; 302) so as to be rotatable about a respective axis of rotation (23, 24, 25; 123, 124; 223, 224; 323, 324).

5. Apparatus according to claim 4,
**characterised in that**
the locking device comprises at least one connecting rod (26), wherein each of the plurality of clamping levers (18, 19, 20, 21) is connected to the connecting rod (26) in an articulated manner by way of a respective articulation (27, 28, 29) in such a manner that a longitudinal portion (LA) of the respective clamping lever (18, 19, 20, 21), which longitudinal portion is located between the respective axis of rotation (23, 24, 25) and the respective articulation (27, 28, 29), serves in the clamping position to fix the respective carrier element (7, 8, 9, 10).

6. Apparatus according to claim 5,
**characterised in that**
the locking device comprises a plurality of damping devices (30, 31, 32, 33) which in each case are arranged so as to act between the connecting rod (26) and the respective clamping lever (18, 19, 20, 21).

7. Apparatus according to claim 6,
**characterised in that**
each damping device (30, 31, 32, 33) has a support rod (34, 35, 36, 37) which is connected to the connecting rod (26) in an articulated manner at the respective articulation (27, 28, 29) and passes through the respective clamping lever (18, 19, 20, 21) in such a manner that it can move relative thereto, and has a compression spring (38, 39, 40, 41), wherein the compression spring (38, 39, 40, 41) bears on the one hand against the supporting rod (34, 35, 36, 37) and on the other hand against the respective clamping lever (18, 19, 20, 21).

8. Apparatus according to any one of the preceding claims,
**characterised in that**
the operating member (11) is a cam element which has a cam control face (43) and is mounted on the apparatus body (2) so as to be rotatable about a cam axis (44), and the locking device comprises an actuating lever (45) which is mounted on the apparatus body (2) so as to be rotatable about an actuating lever axis (46), wherein the actuating lever (45) has on one side of the actuating lever axis (46) a contact face (47) with which the cam control face (43) comes into contact.

9. Apparatus according to claim 8 in conjunction with claim 5,
**characterised in that**
the locking device comprises at least one compensating element (48) which on the one hand is connected to the connecting rod (26) in an articulated manner by way of a first compensating articulation (49) and on the other hand is connected to the actuating lever (45) in an articulated manner by way of a second compensating articulation (50) on a side of the actuating lever axis (46) that faces away from the contact face (47).

10. Apparatus according to claim 8 in conjunction with claim 5,
**characterised in that**
the first compensating articulation (49) coincides with the articulation (27) that connects the connecting rod (26) in an articulated manner to the clamping lever (18) that is arranged closest to the actuating lever (45).

11. Apparatus according to claim 4,
**characterised in that**
the operating member (111; 211) is operatively connected to a first and a second clamping lever (118, 119; 218, 219) in such a manner that those ends of the first and second clamping levers (118, 119; 218, 219) that are remote from the carrier elements (107, 108; 207, 208) are pulled towards one another in the respective clamping position so that the carrier elements (107, 108; 207, 208) associated with the first and second clamping levers (118, 119; 218, 219) are pushed away from one another against guide faces of the guiding receivers in the clamping position.

12. Apparatus according to any one of the preceding claims,
**characterised in that**
the operating member (111; 211) is operatively connected to a first and a second clamping lever (118, 119; 218, 219) in such a manner that those ends of the first and second clamping levers (118, 119; 218, 219) that are remote from the respective carrier elements (107, 108; 207, 208) are pulled towards one another in the clamping position so that the carrier elements (107, 108; 207, 208) associated with the first and second clamping levers (118, 119; 218, 219) are likewise pushed towards one another and thus against guide faces of the guiding receivers in the clamping position.

13. Apparatus according to claim 11 or 12,
**characterised in that**
the operating member (111) is connected to the first clamping lever (118) in an articulated manner by way of a pivotal articulation (125), and a tension element (126) is connected by way of a first articulation (127) to the operating member (111) and by way of a second articulation (128) to the second clamping lever (119), wherein the first articulation (127) and the pivotal articulation (125) are spaced apart from one another, and wherein, on pivoting of the operating member (111) about the axis of the pivotal articulation (125) from a released position, in which the clamping levers (118, 119) are in their release position, into a locked position, in which the clamping levers (118, 119) are in their clamping position, a distance of the first articulation (127) from the second articulation (128) first increases against an elastic restoring force and then reaches a maximum value at a dead centre position of the operating member (111) and finally decreases again owing to the action of the elastic restoring force.

14. Apparatus according to claim 11 or 12,
**characterised in that**
the operating member (211), in a gap between the first and the second clamping lever (218, 219), is mounted on the apparatus body (202) in an articulated manner by way of a pivotal articulation (225), wherein a first tension element (226) is connected by way of a first articulation (227) to the operating member (211) and by way of a second articulation (228) to the second clamping lever (219), wherein the first articulation (227) and the pivotal articulation (227) are spaced apart from one another, wherein a second tension element (236) is connected by way of a third articulation (237) to the first clamping lever (218) and by way of a fourth articulation (238) to the operating member (211), wherein the first articulation (227) and the fourth articulation (238) are arranged on opposite sides of the pivotal articulation (225), and wherein, on pivoting of the operating member (211) about the axis of the pivotal articulation (225) from a released position, in which the clamping levers (218, 219) are in their release position, into a locked position, in which the clamping levers (218, 219) are in their clamping position, a distance of the first articulation (227) from the second articulation (228) first increases against an elastic restoring force, then reaches a maximum value at a dead centre position of the operating member (211) and finally decreases again owing to the action of the elastic restoring force, and the second tension element (236) pulls the first clamping lever (218) in the direction towards the second clamping lever (219).

15. Apparatus according to claim 4,
**characterised in that**
the operating member (311) is operatively connected to a first and a second clamping lever (318, 319) in such a manner that those ends of the first and second clamping levers (318, 319) that are remote from the carrier elements (307, 308) are pulled in the same direction in the respective clamping position, so that the carrier elements (307, 308) associated with the first and second clamping levers (318, 319) are pushed in the clamping position in a direction opposite to that direction against guide faces of the guiding receivers.

16. Apparatus according to any one of the preceding claims,
**characterised in that**
the operating member (311) is operatively connected to a first and a second clamping lever (318, 319) in such a manner that those ends of the first and second clamping levers (318, 319) that are remote from the carrier elements (307, 308) are pulled in the same direction in the respective clamping position, so that the carrier elements (307, 308) associated with the first and second clamping levers (318, 319) are likewise pushed **in that** direction and thus against guide faces of the guiding receivers.

17. Apparatus according to claim 15 or 16,
**characterised in that**
the operating member (311), outside a gap between the first and the second clamping levers (318, 319), is mounted on the apparatus body (302) in an articulated manner by way of a pivotal articulation (325), wherein a first tension element (326) is connected by way of a first articulation (327) to the operating member (311) and by way of a second articulation (328) to the first clamping lever (319), wherein the first articulation (327) and the pivotal articulation (327) are spaced apart from one another, wherein a second tension element (336) is connected by way of a third articulation (337) to the first clamping lever (318) and by way of a fourth articulation (238) to the second clamping lever (319), and wherein, on pivoting of the operating member (311) about the axis of the pivotal articulation (325) from a released position, in which the clamping levers (318, 319) are in their release position, into a locked position, in which the clamping levers (318, 319) are in their clamping position, a distance of the first articulation (327) from the second articulation (328) first increases against an elastic restoring force, then reaches a maximum value at a dead centre position of the operating member (311) and finally decreases again owing to the action of the elastic restoring force, and the second tension element (336) pulls the second clamping lever (319) in the direction towards the first clamping lever (319).

18. Apparatus according to claim 13, 14 or 17,
**characterised in that**
the first articulation (127; 227; 327) has an articulation element (129; 229; 329) through which the tension element (126), or the first tension element (226; 336), passes, in such a manner that it is movable in a longitudinal direction of the tension element (126), or of the first tension element (226; 326), relative thereto, and the elastic restoring force of at least one compression spring (130; 230; 330) is effected, which bears against the tension element (126), or against the first tension element (226; 326), and pushes the articulation element (129; 229; 339) in the direction towards the second articulation (128; 228; 328).

## Revendications

1. Dispositif (1 ; 101 ; 201 ; 301) pour travailler un sol agricole en déplaçant le dispositif (1 ; 101; 201 ; 301) le long du sol dans une direction de déplacement d'un véhicule de traction pour tirer le dispositif (1 ; 101 ; 202 ; 301), dans lequel le dispositif (1 ; 101 ; 202 ; 301) comprend un corps du dispositif (2 ; 102 ; 202 ; 302) ayant un plan longitudinal (LE) qui est sensiblement parallèle à la direction de déplacement, plusieurs outils de travail (3, 4, 5, 6 ; 103, 104 ; 203, 204 ; 303, 304) et plusieurs éléments de support allongés (7, 8, 9, 10 ; 107, 108 ; 207, 208 ; 307, 308) qui portent les outils de travail (3, 4, 5, 6 ; 103, 104 ; 203, 204 ; 303, 304) et sont montés sur le corps du dispositif (2 ; 102 ; 202 ; 302), dans lequel les éléments de support (7, 8, 9, 10 ; 107, 108 ; 207, 208 ; 307, 308) sont respectivement mobiles transversalement au plan longitudinal (LE), de sorte que l'outil de travail respectif (3, 4, 5, 6 ; 103, 104; 203, 204 ; 303, 304) peut être disposé à différentes distances du plan longitudinal (LE), et dans lequel le dispositif (1 ; 101 ; 201 ; 301) comporte un dispositif de blocage pour bloquer les éléments de support (7, 8, 9, 10 ; 107, 108 ; 207, 208 ; 307, 308) sur le corps du dispositif (2 ; 102 ; 202 ; 302), dans lequel le dispositif de blocage comprend un organe d'actionnement (11 ; 111 ; 211 ; 311) par l'actionnement duquel le blocage des plusieurs éléments de support (7, 8, 9, 10 ; 107, 108 ; 207, 208 ; 307, 308) sur le corps du dispositif (2 ; 102 ; 202 ; 302) peut être libéré conjointement ou les plusieurs éléments de support (7, 8, 9, 10 ; 107, 108 ; 207, 208 ; 307, 308) peuvent être fixés conjointement sur le corps du dispositif (2 ; 102 ; 202 ; 302),
**caractérisé en ce que**
le corps du dispositif (2 ; 101 ; 201 ; 301) présente plusieurs logements de guidage (12, 13, 14) avec des surfaces de guidage respectives (15, 16, 17), dans lequel dans les logements de guidage (12, 13, 14) au moins un des éléments de support (7, 8, 9, 10 ; 107, 108 ; 207, 208 ; 307, 308) est guidé de manière à pouvoir coulisser le long de la surface de guidage respective (15, 16, 17), dans lequel le dispositif de blocage comprend plusieurs leviers de serrage (18, 19, 20, 21 ; 118, 119 ; 218, 219 ; 318, 319) et dans lequel au moins un des plusieurs leviers de serrage (18, 19, 20, 21 ; 118, 119 ; 218, 219 ; 318, 319) est associé à chacun des plusieurs logements de guidage (12, 13, 14), et dans lequel par actionnement de l'organe d'actionnement (11 ; 111 ; 211 ; 311) le levier de serrage respectif (18, 19, 20, 21 ; 118, 119 ; 218, 219 ; 318, 319) passe d'une position de serrage dans laquelle il maintient l'élément de support respectif (7, 8, 9, 10 ; 107, 108 ; 207, 208 ; 307, 308) contre la surface de guidage respective (15, 16, 17) du logement de guidage respectif (12, 13, 14) et le fixe ainsi par friction dans le logement de guidage respectif (12, 13, 14) de manière à ne pas pouvoir le déplacer, à une position de libération, dans laquelle il libère l'élément de support respectif (7, 8, 9, 10 ; 107, 108 ; 207, 208 ; 307, 308), de sorte qu'il peut être déplacé dans le logement de guidage respectif (12, 13, 14) le long de la surface de guidage respective (15, 16, 17), et/ou inversement.

2. Dispositif (1 ; 101) selon la revendication 1,
**caractérisé en ce que**
au moyen de l'organe d'actionnement (11 ; 111 ; 211 ; 311), aussi bien le blocage des plusieurs éléments de support (7, 8, 9, 10 ; 107, 108 ; 207, 208 ; 307, 308) sur le corps du dispositif (2 ; 102 ; 202 ; 302) peut être libéré en commun que les plusieurs éléments de support (7, 8, 9, 10 ; 107, 108 ; 207, 208 ; 307 ; 308) peuvent être fixés en commun sur le corps du dispositif (2 ; 102 ; 202 ; 302).

3. Dispositif selon la revendication 1 ou 2,
**caractérisé en ce que**
les logements de guidage (12, 13, 14) sont formés chacun par une gaine de guidage qui présente au moins un trou de passage (22) à travers lequel le levier de serrage respectif (18, 19, 20, 21) peut s'engager pour fixer l'élément de support respectif (7, 8, 9, 10).

4. Dispositif selon l'une des revendications précédentes,
**caractérisé en ce que**
les plusierus leviers de serrage (18, 19, 20, 21 ; 118, 119 ; 218, 219 ; 318, 319) sont montés à rotation sur le corps du dispositif (2 ; 102 ; 202 ; 302) autour d'un axe de rotation respectif (23, 24, 25 ; 123, 124 ; 223, 224 ; 323, 324).

5. Dispositif selon la revendication 4,
**caractérisé en ce que**
le dispositif de blocage comprend au moins une tige de liaison (26), dans lequel chacun des plusieurs leviers de serrage (18, 19, 20, 21) est relié de manière articulée à la tige de liaison (26) par l'intermédiaire d'une articulation respective (27, 28, 29) de telle sorte qu'une section longitudinale (LA) du levier de serrage respectif (18, 19, 20, 21), qui est située entre l'axe de rotation respectif (23, 24, 25) et l'articulation respective (27, 28, 29), sert à fixer l'élément de support respectif (7, 8, 9, 10) dans la position de serrage.

6. Dispositif selon la revendication 5,
**caractérisé en ce que**
le dispositif de blocage comprend plusieurs dispositifs d'amortissement (30, 31, 32, 33) qui sont disposés chacun de manière à agir entre la tige de liaison (26) et le levier de serrage respectif (18, 19, 20, 21).

7. Dispositif selon la revendication 6,
**caractérisé en ce que**
le dispositif d'amortissement respectif (30, 31, 32, 33) comprend une tige d'appui (34, 35, 36, 37) qui est reliée de manière articulée à la tige de liaison (26) au niveau de l'articulation respective (27, 28, 29) et qui traverse le levier de serrage respectif (18, 19, 20, 21) de telle manière, de manière à pouvoir se déplacer par rapport à lui, et présente un ressort de pression (38, 39, 40, 41), dans lequel le ressort de pression (38, 39, 40, 41) s'appuie d'une part sur la tige d'appui (34, 35, 36, 37) et d'autre part sur le levier de serrage respectif (18, 19, 20, 21).

8. Dispositif selon l'une des revendications précédentes,
**caractérisé en ce que**
l'organe d'actionnement (11) est un élément de came avec une surface de commande de came (43), qui est monté sur le corps du dispositif (2) de manière à pouvoir tourner autour d'un axe de came (44), et le dispositif de blocage comprend un levier de réglage (45) qui est monté sur le corps du dispositif (2) de manière à pouvoir tourner autour d'un axe de levier de réglage (46), dans lequel le levier de réglage (45) présente sur un côté de l'axe de levier de réglage (46) une surface d'attaque (47) sur laquelle la surface de commande de came (43) s'attaque.

9. Dispositif selon la revendication 8 en liaison avec la revendication 5,
**caractérisé en ce que**
le dispositif de blocage comprend au moins un organe de compensation (48) qui est relié de manière articulée d'une part à la tige de liaison (26) par l'intermédiaire d'une première articulation de compensation (49) et d'autre part au levier de réglage (45) par l'intermédiaire d'une deuxième articulation de compensation (50) sur un côté de l'axe (46) du levier de réglage qui est opposé à la surface d'attaque (47).

10. Dispositif selon la revendication 8 en combinaison avec la revendication 5,
**caractérisé en ce que**
la première articulation de compensation (49) coïncide avec l'articulation (27) qui relie de manière articulée la tige de liaison (26) au levier de serrage (18) qui est disposé le plus près du levier de réglage (45).

11. Dispositif selon la revendication 4,
**caractérisé en ce que**
l'organe d'actionnement (111 ; 211) est en liaison active avec un premier et un deuxième levier de serrage (118, 119 ; 218, 219) de telle sorte que les extrémités du premier et du deuxième levier de serrage (118, 119 ; 218, 219) qui sont opposées aux éléments de support (107, 108 ; 207, 208) sont tirées l'une vers l'autre dans la position de serrage respective, de sorte que les éléments de support (107, 108 ; 207, 208) associés au premier et au deuxième levier de serrage (118, 119 ; 218, 219) sont repoussés l'un de l'autre dans la position de serrage contre des surfaces de guidage des logements de guidage.

12. Dispositif selon l'une des revendications précédentes,
**caractérisé en ce que**
l'organe d'actionnement (111 ; 211) est en liaison active avec un premier et un deuxième levier de serrage (118, 119 ; 218, 219) de telle sorte que les extrémités du premier et du deuxième levier de serrage (118, 119 ; 218, 219) qui sont éloignées des éléments de support (107, 108 ; 207, 208) sont tirées l'une vers l'autre dans la position de serrage respective, de sorte que les éléments de support (107, 108 ; 207, 208) associés au premier et au deuxième levier de serrage (118, 119 ; 218, 219) sont également poussés l'un vers l'autre dans la position de serrage et ainsi contre des surfaces de guidage des logements de guidage.

13. Dispositif selon la revendication 11 ou 12,
**caractérisé en ce que**
l'organe d'actionnement (111) est relié de manière articulée au premier levier de serrage (118) par une articulation pivotante (125) et un élément de traction (126) est relié à l'organe d'actionnement (111) par une première articulation (127) ainsi qu'au deuxième levier de serrage (119) par une deuxième articulation (128), dans lequel la première articulation (127) et l'articulation pivotante (125) sont espacées l'une de l'autre, et dans lequel lors du pivotement de l'organe d'actionnement (111) autour de l'axe de l'articulation pivotante (125) d'une position de relâchement, dans laquelle les leviers de serrage (118, 119) se trouvent dans leur position de libération, dans une position de blocage dans laquelle les leviers de serrage (118, 119) se trouvent dans leur position de serrage, une distance entre la première articulation (127) et la deuxième articulation (128) augmente tout d'abord à l'encontre d'une force de rappel élastique, puis atteint une valeur maximale dans une position de point mort de l'organe d'actionnement (111) et diminue finalement à nouveau en raison de l'action de la force de rappel élastique.

14. Dispositif selon la revendication 11 ou 12,
**caractérisé en ce que**
l'organe d'actionnement (211) est monté de manière articulée sur le corps du dispositif (202) dans un espace intermédiaire entre le premier et le deuxième levier de serrage (218, 219) par l'intermédiaire d'une articulation pivotante (225), dans lequel un premier élément de traction (226) est relié à l'organe d'actionnement (211) par une première articulation (227) ainsi qu'au deuxième levier de serrage (219) par une deuxième articulation (228), dans lequel la première articulation (227) et l'articulation pivotante (227) sont espacées l'une de l'autre, dans lequel un deuxième élément de traction (236) est relié par une troisième articulation (237) au premier levier de serrage (218) ainsi que par une quatrième articulation (238) à l'organe d'actionnement (211), dans lequel la première articulation (227) et la quatrième articulation (238) sont disposées sur des côtés opposés de l'articulation pivotante (225), et dans lequel, lors du pivotement de l'organe d'actionnement (211) autour de l'axe de l'articulation pivotante (225), d'une position de relâchement, dans laquelle les leviers de serrage (218, 219) se trouvent dans leur position de libération, à une position de blocage, dans laquelle les leviers de serrage (218, 219) se trouvent dans leur position de serrage, une distance entre la première articulation (227) et la deuxième articulation (228) augmente tout d'abord à l'encontre d'une force de rappel élastique, puis atteint une valeur maximale dans une position de point mort de l'organe d'actionnement (211) et finalement diminue à nouveau en raison de l'action de la force de rappel élastique et le deuxième élément de traction (236) tire le premier levier de serrage (218) en direction du deuxième levier de serrage (219).

15. Dispositif selon la revendication 4,
**caractérisé en ce que**
l'organe d'actionnement (311) est en liaison active avec un premier et un deuxième levier de serrage (318, 319) de telle sorte que les extrémités du premier et du deuxième levier de serrage (318, 319) qui sont opposées aux éléments de support (307, 308) sont tirées dans la même direction dans la position de serrage respective, de sorte que les éléments de support (307, 308) associés au premier et au deuxième levier de serrage (318, 319) sont pressés dans la position de serrage dans une direction opposée à cette direction contre des surfaces de guidage des logements de guidage.

16. Dispositif selon l'une des revendications précédentes,
**caractérisé en ce que**
l'organe d'actionnement (311) est en liaison active avec un premier et un deuxième levier de serrage (318, 319) de telle sorte que les extrémités du premier et du deuxième levier de serrage (318, 319) qui sont opposées aux éléments de support (307, 308) sont tirées dans la même direction dans la position de serrage respective, de sorte que les éléments de support (307, 308) associés au premier et au deuxième levier de serrage (318, 319) sont également poussés dans cette direction et ainsi contre des surfaces de guidage des logements de guidage.

17. Dispositif selon la revendication 15 ou 16,
**caractérisé en ce que**
l'organe d'actionnement (311) est monté de manière articulée sur le corps du dispositif (302) à l'extérieur d'un espace intermédiaire entre le premier et le deuxième levier de serrage (318, 319) par l'intermédiaire d'une articulation pivotante (325), dans lequel un premier élément de traction (326) est relié à l'organe d'actionnement (311) par une première articulation (327) ainsi qu'au premier levier de serrage (319) par une deuxième articulation (328), dans lequel la première articulation (327) et l'articulation pivotante (327) sont espacées l'une de l'autre, dans lequel un deuxième élément de traction (336) est relié par une troisième articulation (337) au premier levier de serrage (318) ainsi que par une quatrième articulation (238) au deuxième levier de serrage (319), et dans lequel, lors du pivotement de l'organe d'actionnement (311) autour de l'axe de l'articulation pivotante (325), d'une position de relâchement, dans laquelle les leviers de serrage (318, 319) se trouvent dans leur position de libération, à une position de blocage, dans laquelle les leviers de serrage (318, 319) se trouvent dans leur position de serrage, une distance entre la première articulation (327) et la deuxième articulation (328) augmente d'abord à l'encontre d'une force de rappel élastique, puis atteint une valeur maximale dans une position de point mort de l'organe d'actionnement (311) et diminue finalement à nouveau en raison de l'effet de la force de rappel élastique et le deuxième élément de traction (336) tire le deuxième levier de serrage (319) en direction du premier levier de serrage (319).

18. Dispositif selon la revendication 13, 14 ou 17,
**caractérisé en ce que**
la première articulation (127 ; 227 ; 327) présente un élément d'articulation (129 ; 229 ; 329) qui est traversé par l'élément de traction (126) ou le premier élément de traction (226 ; 336) de telle sorte qu'il est mobile dans une direction longitudinale de l'élément de traction (126) ou du premier élément de traction (226 ; 336) par rapport à celui-ci, et la force de rappel élastique est provoquée par au moins un ressort de compression (130 ; 230 ; 330) qui s'appuie sur l'élément de traction (126) ou sur le premier élément de traction (226 ; 326) et qui pousse l'élément d'articulation (129 ; 229 ; 339) en direction de la deuxième articulation (128 ; 228 ; 328).
